# EUROPÄISCHE PATENTSCHRIFT

(11) **EP 3 924 225 B1**
(45) Veröffentlichungstag und Bekanntmachung des Hinweises auf die Patenterteilung: **30.08.2023**
(21) Anmeldenummer: 20705890.0
(22) Anmeldetag: 06.02.2020
(51) Int. Cl.: B60T 7/08, B60T 8/36, B60T 13/68, B60T 8/88

(54) **FESTSTELLBREMSANORDNUNG MIT RADINDIVIDUELLER ABS-STEUERUNG**
PARKING BRAKE WITH ABS CONTROL ON THE INDIVIDUAL WHEELS.
FREIN DE STATIONNEMENT AVEC ABS SUR CHAQUE ROUE INDIVIDUELLE

(30) Priorität: 15.02.2019 DE 102019103901
(43) Veröffentlichungstag der Anmeldung: 22.12.2021
(73) Patentinhaber: ZF CV Systems Europe BV, 1170 Brussels (BE)
(72) Erfinder: VAN THIEL, Julian, 30938 Grossburgwedel (DE); BENSCH, Uwe, 30161 Hannover (DE)
(74) Vertreter: Rabe, Dirk-Heinrich
(86) Internationale Anmeldenummer: PCT/EP2020/052928
(87) Internationale Veröffentlichungsnummer: WO 2020/165008

(56) Entgegenhaltungen:
- EP-A1- 0 995 659
- CN-A- 105 905 087
- DE-A1-102014 006 613
- GB-A- 2 448 007

## Beschreibung

Die vorliegende Erfindung betrifft eine Feststellbremsanordnung für ein elektronisch steuerbares pneumatisches Bremssystem für ein Fahrzeug, insbesondere Nutzfahrzeug, mit einer Feststellbremseinheit, die einen Vorratsanschluss zum Empfangen eines Vorratsdrucks, einen Bremswunschanschluss zum Empfangen eines Feststellbremswunsches und einen Feststellbremsdruckanschluss zum Bereitstellen eines Feststellbremsdrucks aufweist.

Ferner betrifft die Erfindung ein elektronisch steuerbares pneumatisches Bremssystem, aufweisend eine derartige Feststellbremsanordnung sowie ein Verfahren zum Steuern des elektronisch steuerbaren pneumatischen Bremssystems.

Derartige Feststellbremsanordnungen werden in Fahrzeugen, insbesondere Nutzfahrzeugen dazu eingesetzt, diese in geparktem Zustand abzustellen. Üblicherweise wirken solche Feststellbremsanordnung auf Federspeicherbremszylinder von sogenannten Federspeicherbremsen oder Federspeicherteile von kombinierten Bremszylindern, die üblicherweise an einer Hinterachse eines Nutzfahrzeuges angebracht sind. Die Federspeicherbremszylinder solcher Federspeicherbremsen bzw. Federspeicherteile haben die Eigenschaft, dass sie im belüfteten Zustand gelöst sind und im entlüfteten Zustand aufgrund der Kraft einer Feder zuspannen und so das Fahrzeug bremsen. Im üblichen Fahrbetrieb muss daher ein Federspeicherbremsdruck ausgesteuert werden, um die Federspeicherbremszylinder zu lösen. Zum Abstellen des Fahrzeugs betätigt dann der Fahrzeugführer einen entsprechenden Parkbremsschalter oder Parkbremshebel, der entweder rein pneumatisch wirkt und pneumatisch und mechanisch die Federspeicherbremszylinder entlüftet, oder einen elektrischen Parkbremsschalter, der ein entsprechendes Signal an ein Feststellbremsmodul der Feststellbremsanordnung sendet, die dann, basierend auf dem Empfang des elektrischen Signals, ein oder mehrere elektromagnetische Ventile schaltet, die dann zum Entlüften der Federspeicherbremszylinder führen.

Neben dieser Hauptfunktion von Feststellbremsanordnungen werden Feststellbremsanordnungen aber auch von Fahrern zum Hilfsbremsen eingesetzt, beispielsweise, wenn das reguläre Betriebsbremssystem einen Fehler hat. Fahrer können in einem solchen Fall manuell den Parkbremsschalter kurz betätigen, um ein Bremsen der entsprechenden Achsen vorzusehen.

Darüber hinaus existieren Systeme, in denen die Feststellbremsanordnung selbsttätig, oder durch ein weiteres Modul gesteuert, einen Redundanzbetrieb übernehmen kann. Auch in einem solchen Fall werden dann die Federspeicherbremszylinder über die Feststellbremsanordnung angesteuert, um die entsprechende Achse, bzw. Achsen, redundant einzubremsen.

Insbesondere in Betriebsbremssystemen für höhere Automatisierungen ist es wünschenswert, eine wenigstens rudimentäre Schlupfregelung an den Federspeicherbremszylindern vorzusehen, um einen möglichst fehlertoleranten Betrieb zu gewährleisten. Hierbei wäre insbesondere eine radindividuelle Schlupfregelung für den Redundanzbetrieb wünschenswert.

In DE 199 42 533 A1 wird eine Feststellbremsvorrichtung für Fahrzeuge vorgeschlagen, insbesondere für druckluftgebremste Nutzfahrzeuge, mit einem Betätigungselement zur Betätigung von Radbremseinrichtungen. Diese Feststellbremsvorrichtung weist eine Blockierschutzsteuereinrichtung der Feststellbremse auf, welche die Radbremseinrichtung abhängig von der durch ein Sensormittel erfassten Drehzahl der durch die Radbremseinrichtung mit einer Feststellbremskraft zu beaufschlagenden Räder derart ansteuert, dass ein Blockieren der Räder verhindert wird. Dazu wird ein separates 3/2-Wege-Ventil zwischen ein Feststellbremsventil und den entsprechenden Federspeicherbremszylinder geschaltet, oder der Federspeicherbremsdruck wird über die für die entsprechenden Bremsen vorgesehenen ABS-Ventile geleitet, die dazu modifiziert sind.

Ferner offenbart EP 2 059 428 A1 eine pneumatische Bremsanlage für ein Fahrzeug mit druckluftbetätigbaren Bremszylindern zum Betätigen von Radbremsen, wobei eine erste Gruppe von Radbremsen einem ersten Bremskreis mit einem ersten Druckluftvorratsbehälter zum Bereitstellen eines ersten Vorratsdrucks und eine zweite Gruppe von Radbremsen einen zweite Bremskreis mit einem zweiten Druckluftvorratsbehälter zum Bereitstellen eines zweiten Vorratsdrucks angehört. Wenigstens ein Bremszylinder des ersten Bremskreises ist als kombinierter Federspeicher-/Membranzylinder mit einem Federspeicherteil zum Bereitstellen einer Feststellbremse und einem Membranteil zum Bereitstellen einer Betriebsbremse ausgebildet, wobei bei einem Ausfall des ersten Bremskreises der Federspeicherteil entlüftbar ist, um die Feststellbremse einzulegen. Ferner ist ein erster Drucksensor zum Messen des ersten Vorratsdrucks vorgesehen und mit einer elektrischen Steuereinheit verbunden, mittels der ein Modulator zum Be- und Entlüften des Federspeicherteils steuerbar ist. Die Steuereinheit ist zum Erzeugen eines elektrischen Steuersignals für ein elektrisch betätigbares Magnetventil des Modulators ausgebildet, wenn der vom ersten Drucksensor gemessene Wert unter einen bestimmten vorbestimmten Mindestdruck abfällt, wobei mittels des Magnetventils der Federspeicherteil mittelbar oder unmittelbar be- und entlüftbar ist.

Darüber hinaus offenbart EP 2 108 554 A1 eine Bremsanlage eines Nutzfahr-zeugs mit einer Feststellbremsaktuatoren umfassenden Feststellbremse und einer Betriebsbremse, wobei im Falle eines Defektes der Betriebsbremse die Feststellbremse eine Bremsung des Nutzfahrzeugs unterstützt, wobei die Feststellbremse ein elektronisches Steuergerät umfasst, welches dazu ausgelegt ist, eine ABS-Regelschleife zum Betätigen der Feststellbremsaktuatoren durch-zuführen, wobei die Feststellbremse dazu ausgelegt ist, mehrere Fahrzeugachsen in beliebigen Kombinationen zu bremsen, wobei nur die Fahrzeugachsen gebremst werden, die von dem Defekt der Betriebsbremse betroffen sind. Nachteilig ist hieran, dass dies allein für elektronisch steuerbare Bremssysteme in ausreichender Weise funktioniert, aber für rein pneumatische Bremssysteme nicht umsetzbar ist.

CN 105 905 087 A offenbart ein elektronisches Parksystem vom Luftdrucktyp mit einer Notbremsfunktion. Das elektronische Parksystem vom Luftdrucktyp umfasst eine Parkbremssteuerung, die elektrisch mit einer hinteren Betriebsbremseinheit verbunden ist, und umfasst ferner einen elektronischen Steuerschalter, einen Geschwindigkeitssensor für das linke Rad und einen Geschwindigkeitssensor für das rechte Rad, die alle elektrisch mit dem Feststellbremsregler verbunden sind. Die hintere Betriebsbremseinheit umfasst einen Luftspeicherbehälter, ein Relaisventil, ein erstes ABS-Elektromagnetventil, eine linke Feststellbremsluftkammer, ein zweites ABS-Elektromagnetventil und eine rechte Feststellbremsluftkammer.

EP 0 995 659 A1 offenbart ein Feststellbremssystem in einem Fahrzeug ohne EBS, wobei zum Feststellbremsen die Bremsen so angeordnet sind, dass sie mit Betätigungsströmungsmittel von einer Druckquelle unter der Steuerung einer manuell betätigten elektrischen Vorrichtung versorgt werden, und wobei beim Auswählen einer Feststellbremsung durch Betätigung des elektrischen Geräts, die Bremsen so angeordnet sind, dass sie angezogen und mechanisch verriegelt oder eingeklinkt werden.

DE 10 2014 006613 A1 zeigt ein Steuergerät (23) für ein druckluftbetriebenes Bremssystem (1, 1') eines Fahrzeugs gemäß Anspruch 1, ein Bremssystem (1, 1') mit einem solchen Steuergerät (23) nach Anspruch 8 und ein Fahrzeug mit einem solchen Bremssystem (1, 1') nach Anspruch 15. Im Stand der Technik ist bekannt, Steuereinrichtungen in Nutzfahrzeugen separat anzuordnen. Nachteilig daran ist, dass alle Steuergeräte untereinander mittels Leitungen verbunden werden müssen, was hohen Aufwand und hohe Kosten mit sich bringt. Zudem ist ein hoher Platzbedarf gegeben. Zur Lösung der Aufgabe wird ein Steuergerät (23) vorgeschlagen, welches ein Achssteuermodul (25) mit einer Steuerfunktion zur Aussteuerung eines pneumatischen Drucks zur Bereitstellung einer Betriebsbremsfunktion und eine Fahrdynamiksensoreinheit (27) mit Beschleunigungs- und/oder Drehratensensoren umfasst, welche für eine Fahrdynamikregelung des Fahrzeugs dienen.

GB 2 448 007 A zeigt ein Bremssystem (10), das einen ersten und einen zweiten Bremsanforderungssignal-Generator (14b, 14b') umfasst, wenigstens zwei Modulatoren (16a, 16b, 16c, 16d), wobei jeder mit einer Druckfluidquelle (20, 20') verbunden ist. Der erste Modulator ist elektrisch mit dem ersten Bremsanforderungssignal-Generator verbunden und hat ein Eingabeelement zum Erhalten eines elektrischen Breamsanforderungssignals. Der zweite Modulator ist elektrisch mit dem zweiten Bremsanforderungssignal-Generator verbunden und hat ein Eingabeelement zum Erhalten eines elektrischen Bremsanforderungssignals. Jeder Modulator ist angepasst, bei Erhalt eines elektrischen Bremsanforderungssignals ein angemessenes pneumatisches oder hydraulisches Fluidbremsaktivierungssignal zum Weiterleiten zu einem Fluidbetriebenen Bremsaktuator zu generieren. Die elektrische Verbindung zwischen dem ersten Bremsanforderungssignal-Generator und dem ersten Modulator ist komplett getrennt von der elektrischen Verbindung zwischen dem zweiten elektrischen Bremsanforderungssignal-Generator und dem zweiten Modulator.

Aufgabe der vorliegenden Erfindung ist es, daher eine Feststellbremsanordnung der eingangs genannten Art bereitzustellen, bei der eine Schlupfregelung von Feststellbremsen vorgesehen ist.

Die Aufgabe wird in einem ersten Aspekt der Erfindung durch eine Feststellbremsanordnung der eingangs genannten Art gelöst, die neben der Feststellbremseinheit eine ABS-Ventilanordnung aufweist, die eine erste ABS-Ventileinheit für einen ersten Kanal und eine zweite ABS-Ventileinheit für einen zweiten Kanal aufweist, wobei die erste ABS-Ventileinheit den Feststellbremsdruck von der Feststellbremseinheit empfängt und einen ersten Bremsdruck für mindes-tens einen ersten Federspeicherbremszylinder an dem ersten Kanal bereitstellt, wobei die erste ABS-Ventileinheit dazu ausgebildet ist, in Abhängigkeit eines empfangenen ersten ABS-Signals den ersten Kanal wenigstens gestuft zu belüften, und wobei die zweite ABS-Ventileinheit den Feststellbremsdruck von der Feststellbremseinheit empfängt und einen zweiten Bremsdruck für mindes-tens einen zweiten Federspeicherbremszylinder an dem zweiten Kanal bereit-stellt, wobei die zweite ABS-Ventileinheit dazu ausgebildet ist, in Abhängigkeit eines empfangenen zweiten ABS-Signals den zweiten Kanal wenigstens gestuft zu belüften.

Der Erfindung liegt die Erkenntnis zugrunde, dass basierend auf einer einkanaligen Feststellbremseinheit, wie sie grundsätzlich im Stand der Technik bekannt ist, eine wenigstens zweikanalige schlupfgeregelte Aussteuerung von Drücken für Federspeicherbremszylinder realisiert werden kann, indem erste und zweite ABS-Ventileinheiten vorgesehen sind, die mit der Feststellbremseinheit verbunden sind und den entsprechenden Druck an Federspeicherbremszylindern bereitstellen. Dabei kann vorgesehen sein, dass der erste Kanal beispielsweise der Hinterachse, und der zweite Kanal der Vorderachse zugeordnet ist. Auch kann eine radindividuelle Zuordnung von Kanälen erfolgen. Auf diese Weise können die ersten und zweiten Bremsdrücke unabhängig voneinander sein. Vorzugsweise sind die ABS-Ventileinheiten als inverse ABS-Ventileinheiten ausgebildet. Vorzugsweise sind die ABS-Ventileinheiten im normalen Fahrbetrieb und stromlos offen, sodass der von der Feststellbremseinheit bereitgestellte Feststellbremsdruck durch die ersten und zweiten ABS-Ventileinheiten durchgesteuert und an den entsprechenden ersten und zweiten Kanälen bereitgestellt wird. Vorzugsweise erlauben die ersten und zweiten ABS-Ventileinheiten auch ein gestuftes Entlüften. Die Feststellbremseinheit ist einkanalig und der Feststellbremsdruckanschluss kann entweder an einem einzelnen Anschluss, aber auch an zwei separaten Anschlüssen, für die ersten und zweiten ABS-Ventileinheiten münden.

Die Erfindung ist in den beigefügten unabhängigen Vorrichtungs- und Verfahrensansprüchen 1 und 18 definiert.

Nach einer ersten bevorzugten Ausführungsform weist die Feststellbremseinheit ein Relais-Ventil zum Empfangen des Vorratsdrucks und eines Feststellbrems-Steuerdrucks auf, wobei das Relais-Ventil in Abhängigkeit des Feststellbrems-Steuerdrucks den Feststellbremsdruck in dem Feststellbremsdruckanschluss aussteuert. In dieser Variante handelt es sich also um eine pneumatisch wirkende Feststellbremseinheit, die basierend auf einem Steuerdruck, nämlich dem Feststellbrems-Steuerdruck, den Feststellbremsdruck bereitstellt. Eine solche Feststellbremseinheit ist insbesondere über ein Parkbremsventil betätigbar, wie es beispielsweise häufig in nordamerikanischen Varianten in der Fahrerkabine des Fahrzeugs untergebracht ist.

Weiterhin ist bevorzugt, dass die Feststellbremsanordnung in einer bevorzugten Ausführungsform eine ABS-Steuereinheit zum Bereitstellen wenigstens des ersten und zweiten ABS-Signals an den ersten und zweiten ABS-Ventileinheiten aufweist. Diese ABS-Steuereinheit kann grundsätzlich mit jeglichem dafür geeigneten Modul integriert oder als eigenständiges Modul ausgebildet sein. Beispielsweise kann die ABS-Steuereinheit mit einem der beiden ABS-Ventileinheiten integriert sein, oder auch mit der Feststellbremseinheit. Weiterhin ist denkbar, dass die ABS-Steuereinheit mit einem Zentralmodul integriert ist und beispielsweise auf diesem nur als ein Software-Baustein ausgeführt wird. Die ersten und zweiten ABS-Signale für die ersten und zweiten ABS-Ventileinheiten werden vorzugsweise unabhängig voneinander und über separate Kanäle bereitgestellt. Sie sind vorzugsweise dazu vorgesehen, ein Schalten von wenigstens einem Magnetventil in jeweils der ersten und zweiten ABS-Ventileinheit zu verursachen.

In einer Variante der vorliegenden Erfindung ist die Feststellbremseinheit als ein elektropneumatisches Feststellbremsmodul mit einer darin integrierten EPH-Steuereinheit, einer EPH-Vorsteuerventileinheit und einer EPH-Hauptventileinheit ausgebildet. Die EPH-Steuereinheit steuert in bekannter Weise die EPH-Vorsteuerventileinheit, die wenigstens ein elektromagnetisch wirksames Schaltventil aufweist. Die EPH-Vorsteuerventileinheit stellt basierend darauf wenigstens einen Steuerdruck an der EPH-Hauptventileinheit bereit, die dann basierend auf dem Empfang dieses Steuerdrucks direkt oder volumenverstärkt den Feststellbremsdruck an dem Feststellbremsdruckanschluss bereitstellt. Grundsätzlich kann ein solches elektropneumatisches Feststellbremsmodul in jeglicher geeigneter Weise ausgebildet sein.

In dieser Ausführungsform ist vorzugsweise vorgesehen, dass die EPH-Steuereinheit die ersten und zweiten ABS-Signale an den ersten und zweiten ABS-Ventileinheiten bereitstellt. Die EPH-Steuereinheit übernimmt in dieser Ausführungsform folglich vorzugsweise die Aufgabe der ABS-Steuereinheit, bzw. ist mit dieser integriert. Zu diesem Zweck kann die EPH-Steuereinheit auch weitere Signale empfangen, wie insbesondere Signale von Raddrehzahlsenoren, Signale eines Zentralmoduls und/oder Signale einer Einheit für autonomes Fahren.

Vorzugsweise umfasst die erste ABS-Ventileinheit ein erstes ABS-Schaltventil und die zweite ABS-Ventileinheit ein zweites ABS-Schaltventil. Derartige erste und zweite ABS-Schaltventile können beispielsweise direkt zwischen den Feststellbremsdruckanschluss und entsprechende Federspeicherbremszylinder geschaltet werden.

Vorzugsweise weist das erste ABS-Schaltventil einen den Feststellbremsdruck empfangenden ersten ABS-Schaltventilanschluss und einen den ersten Bremsdruck aussteuernden zweiten ABS-Schaltventilanschluss auf, und das zweite ABS-Schaltventil weist einen den Feststellbremsdruck empfangenden dritten ABS-Schaltventilanschluss und einen den zweiten Bremsdruck aussteuernden vierten ABS-Schaltventilanschluss auf, wobei sowohl das erste als auch das zweite ABS-Schaltventil stromlos in einer offenen Schaltstellung sind. Dies bedeutet, dass stromlos der Feststellbremsdruck durch die ersten und zweiten ABS-Schaltventile durchgesteuert werden kann, um so direkt in den ersten und zweiten Kanal, die hier durch den zweiten ABS-Schaltventilanschluss und den vierten ABS-Schaltventilanschluss gebildet werden, ausgesteuert zu werden. Wenn dann nach einem Entlüften der Federspeicherbremszylinder die ersten und zweiten ABS-Schaltventile geschlossen sind, kann bei entsprechender Bereitstellung des Feststellbremsdrucks, durch gepulstes Öffnen dieser ersten und zweiten ABS-Schaltventile ein gestuftes Belüften und somit ein gestuftes Lösen der ersten und/oder zweiten Federspeicherbremszylinder erreicht werden.

Die entsprechenden Schaltsignale zum Schalten der ersten und zweiten ABS-Schaltventile können in dieser Ausführungsform sowohl von der EPH-Steuereinheit als auch von der ABS-Steuereinheit bereitgestellt werden, wenn eine separate ABS-Steuereinheit vorgesehen ist.

In einer bevorzugten Weiterbildung weist die erste ABS-Ventileinheit eine erste ABS-Vorsteuereinheit zum Aussteuern eines ersten und eines zweiten Steuerdrucks und eine erste ABS-Hauptventileinheit auf, und die zweite ABS-Ventileinheit weist eine zweite ABS-Vorsteuereinheit zum Aussteuern eines dritten und eines vierten Steuerdrucks und eine zweite ABS-Hauptventileinheit auf. Die Steuerdrücke werden dann vorzugsweise von den jeweiligen ABS-Hauptventileinheiten empfangen. In dieser Variante sind also anstelle der ersten und zweiten ABS-Schaltventile komplexere Schaltungen vorgesehen, wie sie insbesondere auch in üblichen ABS-Ventilen vorgesehen sind, wobei im vorliegenden Fall die ersten und zweiten ABS-Ventileinheiten vorzugsweise invers ausgebildet sind, um so die invers wirkenden Federspeicherbremszylinder gestuft belüften zu können. Die ersten und zweiten ABS-Vorsteuereinheiten empfangen in dieser Ausführungsform vorzugsweise die ersten und zweiten ABS-Signale, entweder von der ABS-Steuereinheit oder von der EPH-Steuereinheit, wenn die ABS-Steuereinheit in diese integriert ist.

Hierbei kann vorzugsweise vorgesehen sein, dass die erste ABS-Vorsteuereinheit ein erstes Einlass-Vorsteuerventil zum Aussteuern des ersten Steuerdrucks und ein erstes Auslass-Vorsteuerventil zum Aussteuern des zweiten Steuerdrucks aufweist, und die zweite ABS-Vorsteuereinheit ein zweites Einlass-Vorsteuerventil zum Aussteuern des dritten Steuerdrucks und ein zweites Auslass-Vorsteuerventil zum Aussteuern des vierten Steuerdrucks aufweist. Die erste ABS-Hauptventileinheit weist vorzugsweise ferner ein erstes pneumatisch schaltbares Einlass-Hauptventil zum Belüften des ersten Kanals und ein erstes pneumatisch schaltbares Auslass-Hauptventil zum Entlüften des ersten Kanals auf, wobei das erste pneumatisch schaltbare Einlass-Hauptventil einen ersten Steueranschluss zum Empfangen des ersten Steuerdrucks und das erste pneumatisch schaltbare Auslass-Hauptventil einen zweiten Steueranschluss zum Empfangen des zweiten Steuerdrucks aufweist. In entsprechender Weise weist vorzugsweise die zweite ABS-Hauptventileinheit ein zweites pneumatisch schaltbares Einlass-Hauptventil zum Belüften des zweiten Kanals und ein zweites pneumatisch schaltbares Auslass-Hauptventil zum Entlüften des zweiten Kanals auf, wobei das zweite pneumatisch schaltbare Einlass-Hauptventil einen dritten Steueranschluss zum Empfangen des dritten Steuerdrucks und das zweite pneumatisch schaltbare Auslass-Hauptventil einen vierten Steueranschluss zum Empfangen des vierten Steuerdrucks aufweist. Auf diese Weise sind komplette erste und zweite ABS-Ventileinheiten gebildet, die je nach Verschaltung auch ein gestuftes Entlüften der Federspeicherbremszylinder zulassen können. So könnten insbesondere die ersten und zweiten pneumatisch schaltbaren Auslass-Hauptventile dazu verwendet werden, den ersten und zweiten Kanal zu entlüften, wenn ein entsprechender Feststellbremsdruck bereitgestellt ist.

In einer Alternative dazu kann vorgesehen sein, dass die erste ABS-Hauptventileinheit ein erstes pneumatisch schaltbares EPH-Hauptventil zum Aussteuern des Feststellbremsdrucks an dem ersten Kanal und ein erstes pneumatisch schaltbares Vorrats-Hauptventil zum Aussteuern des Vorratsdrucks an dem ersten Kanal aufweist, wobei das erste pneumatisch schaltbare EPH-Hauptventil einen fünften Steueranschluss zum Empfangen des ersten Steuerdrucks und das erste pneumatisch schaltbare Vorrats-Hauptventil einen sechsten Steueranschluss zum Empfangen des zweiten Steuerdrucks aufweist. In entsprechender Weise weist vorzugsweise die zweite ABS-Hauptventileinheit ein zweites pneumatisch schaltbares EPH-Hauptventil zum Aussteuern des Feststellbremsdrucks an dem zweiten Kanal und ein zweites pneumatisch schaltbares Vorrats-Hauptventil zum Aussteuern des Vorratsdrucks an dem zweiten Kanal auf, wobei das zweite pneumatisch schaltbare EPH-Hauptventil einen siebten Steueranschluss zum Empfangen des dritten Steuerdrucks und das zweite pneumatisch schaltbare Vorrats-Hauptventil einen achten Steueranschluss zum Empfangen des vierten Steuerdrucks aufweist. Mittels der ersten und zweiten EPH-Hauptventile sowie Vorrats-Hauptventilen kann also wechselweise der von dem Feststellbremsmodul bereitgestellte Feststellbremsdruck oder der von einem Druckluftvorrat bereitgestellte Vorratsdruck an dem ersten Kanal bzw. zweiten Kanal ausgesteuert werden. Hierdurch ist es möglich, ein Lösen der ersten und zweiten Federspeicherbremszylinder auch oberhalb des von dem Feststellbremsmodul bereitgestellten Feststellbremsdrucks zu erreichen. Wird beispielsweise von dem Feststellbremsmodul nur ein geringer Feststellbremsdruck bereitgestellt, weil die Federspeicherbremszylinder grundsätzlich eingelegt, also entlüftet werden sollen, kann ein gestuftes Lösen der Federspeicherbremszylinder nur zu dem Grad erfolgen, wie ein Feststellbremsdruck von der Feststellbremseinheit bereitgestellt wird. Reicht dieser nicht aus, um ein Lösen der Federspeicherbremszylinder zu erreichen, ist dies mit der zuvor beschriebenen Ausführungsform nicht möglich. Wird allerdings gemäß dieser Ausführungsform ein Bereitstellen von Vorratsdruck an dem ersten und zweiten Kanal unabhängig von der Höhe des bereitgestellten Feststellbremsdrucks ermöglicht, können die Federspeicherbremszylinder auch dann gestuft gelöst werden, also belüftet werden, wenn der von der Feststellbremseinheit bereitgestellte Feststellbremsdruck hierfür nicht ausreichend wäre. Die ersten und zweiten ABS-Vorsteuereinheiten müssen hierzu nicht geändert werden.

Vorzugsweise weist in dieser Ausführungsform die erste ABS-Ventileinheit einen ersten ABS-Vorratsanschluss zum Empfangen des Vorratsdrucks und die zweite ABS-Ventileinheit einen zweiten ABS-Vorratsanschluss zum Empfangen des Vorratsdrucks auf. Der Vorratsdruck ist vorzugsweise derselbe, der auch dem Feststellbremsmodul zugeführt wird, also insbesondere der Vorratsdruck aus einem Feststellbremskreis. Alternativ kann auch vorgesehen sein, dass der Vorratsdruck für die ersten und zweiten ABS-Ventileinheiten aus einem weiteren Druckluftvorrat bereitgestellt wird.

Weiterhin ist bevorzugt, dass, sofern den ersten und zweiten ABS-Ventileinheiten Vorratsdruck zugeführt wird, die erste ABS-Ventileinheit ein erstes ABS-Absperrventil zum Absperren des ersten ABS-Vorratsanschlusses und die zweite ABS-Ventileinheit ein zweites ABS-Absperrventil zum Absperren des zweiten ABS-Vorratsanschlusses aufweist. Hierdurch lässt sich der Vorratsdruck aussperren, beispielsweise dann, wenn ein ausreichender Feststellbremsdruck bereitgestellt wird. Auch der umgekehrte Fall ist denkbar und bevorzugt, dass Vorratsdruck nur dann bereitgestellt wird, wenn auch ein ausreichender Feststellbremsdruck bereitgestellt ist. Auf diese Weise lässt sich dann der bereitgestellte Vorratsdruck dazu verwenden, ein rascheres Belüften der Feststellbremszylinder zu erreichen, wodurch die Reaktionsfähigkeit der Feststellbremsanordnung deutlich erhöht ist.

In einer Variante sind die ersten und zweiten ABS-Absperrventile als pneumatisch schaltbare 2/2-Wege-Ventile ausgebildet. Alternativ dazu sind die ersten und zweiten ABS-Absperrventile als pneumatisch schaltbare 3/2-Wege-Ventile ausgebildet. In dieser zweiten Variante kann zusätzlich vorgesehen sein, dass auch ein Entlüften der ersten und zweiten Kanäle über das jeweilige Absperrventil erlaubt ist. Gegebenenfalls kann hier noch eines der Vorratshauptventile zwischengeschaltet sein. Auf diese Weise kann auch die Reaktionsfähigkeit beim Entlüften, also Einlegen, der Federspeicherbremszylinder erhöht werden.

In einer Variante kann vorgesehen sein, dass die ersten und zweiten ABS-Ventileinheiten getrennt und beabstandet von der Feststellbremseinheit angeordnet sind. Alternativ dazu kann vorgesehen sein, dass die ersten und zweiten ABS-Ventileinheiten an ein Gehäuse der Feststellbremseinheit angeflanscht sind. Weiterhin kann vorgesehen sein, dass die ersten und zweiten ABS-Ventileinheiten und die Feststellbremseinheiten am Modul integriert sind. Je nachdem wie das Bremssystem aufgebaut ist, in dem die Feststellbremsanordnung eingesetzt werden soll, kann sich eine der vorgenannten Integrationsstufen anbieten.

In einem zweiten Aspekt löst die Erfindung die eingangs genannte Aufgabe bei einem elektronisch steuerbaren pneumatischen Bremssystem für ein Fahrzeug, insbesondere Nutzfahrzeug, dadurch, dass dieses aufweist: einen Hinterachsbremskreis, einen Vorderachsbremskreis und einen Feststellbremskreis, wobei der Feststellbremskreis erste und zweite Federspeicherbremszylinder und eine Feststellbremsanordnung nach einer der vorstehend beschriebenen bevorzugten Ausführungsformen einer Feststellbremsanordnung gemäß dem ersten Aspekt der Erfindung aufweist, wobei der erste Kanal mit dem ersten Federspeicherbremszylinder und der zweite Kanal mit dem zweiten Federspeicherbremszylinder verbunden ist. Es soll verstanden werden, dass das elektronisch steuerbare pneumatische Bremssystem gemäß dem zweiten Aspekt der Erfindung und die Feststellbremsanordnung gemäß dem ersten Aspekt der Erfindung gleiche und ähnliche Unteraspekte aufweisen, wie sie insbesondere in den abhängigen Ansprüchen niedergelegt sind. Insofern wird für die Vorteile und besonderen Ausführungsformen des elektronisch steuerbaren pneumatischen Bremssystems auf die Beschreibung zum ersten Aspekt der Erfindung vollumfänglich verwiesen.

In einer ersten bevorzugten Ausführungsform des elektronisch steuerbaren pneumatischen Bremssystems ist die Feststellbremsanordnung so ausgebildet, dass sie eine ABS-Steuereinheit zum Bereitstellen der ersten und zweiten ABS-Signale aufweist, oder die Feststellbremsanordnung ist als elektropneumatisches Feststellbremsmodul ausgebildet mit einer EPH-Steuereinheit, wobei in diesem Fall die ABS-Steuereinheit bzw. EPH-Steuereinheit wenigstens einen ersten elektronischen Redundanzanschluss zum Empfangen eines ersten redundanten elektromagnetischen Bremswunsches aufweisen. Auf diese Weise kann die Feststellbremseinheit dazu genutzt werden, in einem Redundanzfall des Bremssystems, beispielsweise, weil ein anderes Modul des Bremssystems wie beispielsweise das Zentralmodul, nicht mehr oder nicht richtig funktioniert, wenigstens eine Bremsung an der Hinterachse über eine redundante Ansteuerung von Federspeicherbremszylindern zu übernehmen. Gerade in einem solchen Fall ist eine Schlupfregelung an dieser redundant eingebremsten Achse von besonderem Vorteil.

In einem dritten Aspekt wird die eingangs genannte Aufgabe gelöst durch ein Verfahren zum Steuern eines elektronisch steuerbaren pneumatischen Bremssystems gemäß dem zweiten Aspekt der Erfindung, mit den Schritten: Bereitstellen eines ersten Bremsdrucks und eines zweiten Bremsdrucks an ersten und zweiten Federspeicherbremszylindern einer Achse zum Lösen dieser Federspeicherbremszylinder; Ermitteln eines Fehlers, der wenigstens teilweise ein elektronisch gesteuertes Bremsen der Achse mittels Betriebsbremszylindern verhindert; Bereitstellen eines redundanten elektronischen Bremswunschsignals an der Feststellbremsanordnung; und radindividuelles, schlupfgeregeltes Umsetzen des redundanten elektronischen Bremswunschsignals mit der Feststellbremsanordnung an der Achse wenigstens durch gestuftes, schlupfgeregeltes Entlüften der ersten und zweiten Federspeicherbremszylinder.

Es soll verstanden werden, dass das Verfahren gemäß einem dritten Aspekt der Erfindung und die Feststellbremsanordnung gemäß dem ersten Aspekt der Erfindung sowie das Bremssystem gemäß dem zweiten Aspekt der Erfindung gleiche oder ähnliche Unteraspekte aufweisen wie sie insbesondere in den abhängigen Ansprüchen niedergelegt sind. Insofern wird auch in Bezug auf das Verfahren auf die obige Beschreibung zum ersten und zweiten Aspekt der Erfindung vollumfänglich verwiesen.

In einem vierten Aspekt wird die eingangs genannte Aufgabe gelöst durch ein Nutzfahrzeug, mit einer Feststellbremsanordnung nach einer der vorstehend beschriebenen bevorzugten Ausführungsformen einer Feststellbremsanordnung gemäß dem ersten Aspekt der Erfindung. Vorzugsweise weist das Nutzfahrzeug auch ein Bremssystem gemäß dem zweiten Aspekt der Erfindung auf.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: ein erstes Ausführungsbeispiel einer Feststellbremsanordnung;
- Fig. 2: ein zweites Ausführungsbeispiel einer Feststellbremsanordnung;
- Fig. 3: ein drittes Ausführungsbeispiel einer Feststellbremsanordnung;
- Fig. 4: ein viertes Ausführungsbeispiel einer Feststellbremsanordnung;
- Fig. 5: ein fünftes Ausführungsbeispiel einer Feststellbremsanordnung;
- Fig. 6: ein sechstes Ausführungsbeispiel einer Feststellbremsanordnung;
- Fig. 7: ein erstes Ausführungsbeispiel eines Bremssystems gemäß dem zweiten Aspekt der Erfindung;
- Fig. 8: ein zweites Ausführungsbeispiel des Bremssystems;
- Fig. 9: ein drittes Ausführungsbeispiel des Bremssystems; und
- Fig. 10: eine beispielhafte Ausgestaltung einer Feststellbremsanordnung.

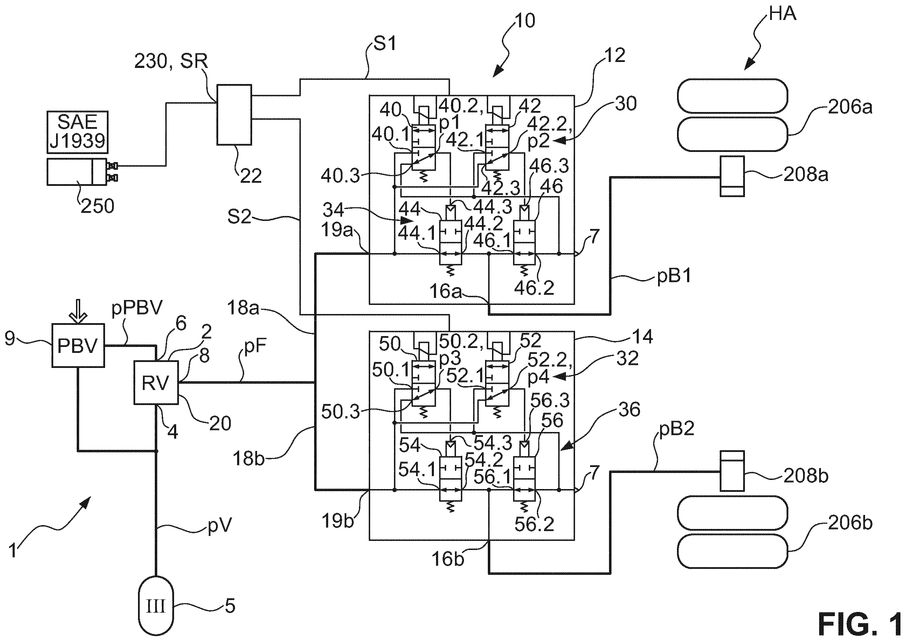

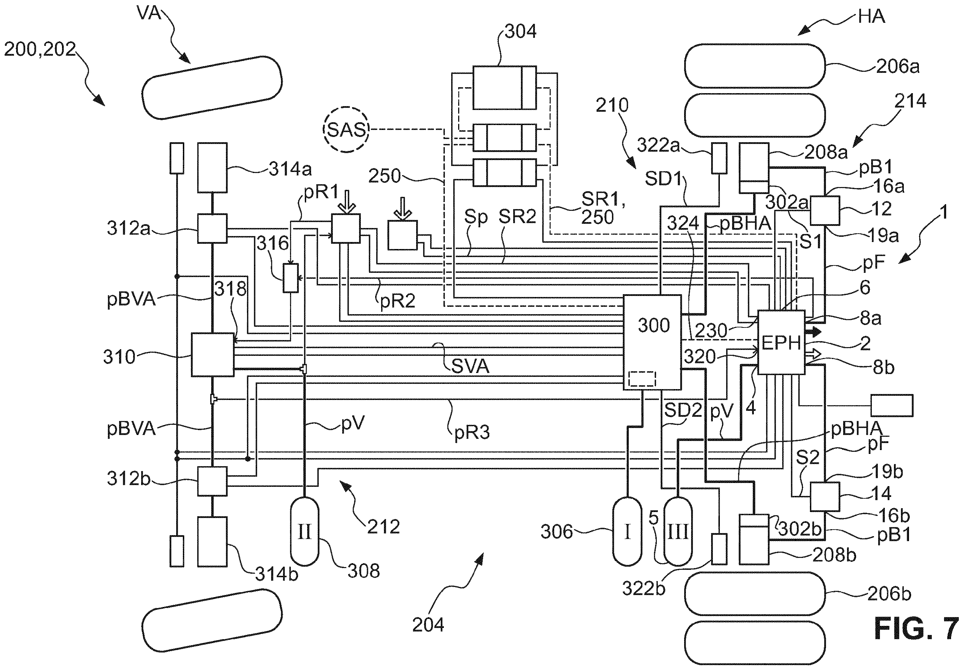

Eine Feststellbremsanordnung 1 (Fig. 1) ist in einem elektronisch steuerbaren pneumatischen Bremssystem 204 (vgl. Fig.7-9) vorgesehen. Die Feststellbremsanordnung 1 weist eine Feststellbremseinheit 2 auf, die ihrerseits dazu vorgesehen ist, einen Feststellbremsdruck pF auszusteuern. Ein solcher Feststellbremsdruck pF wird üblicherweise an ersten und zweiten Federspeicherbremszylindern 208a, 208b bereitgestellt, um diese im Fahrbetrieb zu belüften und somit zu öffnen. Wenn das Fahrzeug 200 abgestellt werden soll, wird durch die Feststellbremseinheit der Feststellbremsdruck reduziert, vorzugsweise bis auf Umgebungsdruck, infolgedessen die Federspeicherbremszylinder 208a, 208b zuspannen.

Zu diesem Zweck wird die Feststellbremseinheit 2 über einen Vorratsanschluss 4 mit Vorratsdruck pV aus einem Druckluftvorrat 5 versorgt. Ferner weist die Feststellbremseinheit 2 einen Bremswunschanschluss 6 zum Empfangen eines Feststellbremswunsches pPBV sowie einen Feststellbremsdruckanschluss 8 zum Bereitstellen des Feststellbremsdrucks pF auf.

In der in Fig. 1 gezeigten Anordnung ist die Feststellbremseinheit 2 als rein pneumatische Feststellbremseinheit ausgebildet und weist ein Relaisventil 20 auf. Der Feststellbremswunsch ist in diesem Fall ein pneumatischer Feststellbremswunsch pPBV, nämlich ein Druck, der von einem Parkbremsventil 9 bereitgestellt wird. Das Parkbremsventil 9 ist in herkömmlicher Weise ausgebildet und empfängt einerseits Vorratsdruck pV, und steuert andererseits bei entsprechender Schaltung als Steuerdruck den Feststellbremswunschdruck pPBV an dem Feststellbremswunschanschluss 6 der Feststellbremseinheit 2 aus, der in diesem Fall als pneumatischer Anschluss ausgebildet ist. In Abhängigkeit der Höhe des Feststellbremswunsches pPBV steuert dann das Relaisventil 20 der Feststellbremseinheit 2 in entsprechender Weise volumenverstärkt den Feststellbremsdruck pF an dem Feststellbremsdruckanschluss 8 aus.

In kritischen Fahrsituationen, oder auch für den Fall, dass Betriebsbremsen an einer entsprechenden Achse (hier beispielshaft Hinterachse HA) ausfallen und die Federspeicherbremszylinder 208a, 208b insofern als redundante Bremsen zum Bremsen dieser entsprechenden Achse vorgesehen sind, ist es wünschenswert, einen Blockierschutz umzusetzen.

Zu diesem Zweck wird gemäß der vorliegenden Ausführungsform der Feststellbremsdruck pF nicht direkt an die ersten und zweiten Federspeicherbremszylinder 208a, 208b weitergegeben, sondern vielmehr wird eine schlupfgeregelte Aussteuerung vorgenommen. Hierzu weist die Feststellbremsanordnung 1 eine ABS-Ventilanordnung 10 auf, die den Feststellbremsdruck pF empfängt und diesen dann schlupfgeregelt als ersten bzw. zweiten Bremsdruck pB1, pB2 bereitstellt. Die ABS-Ventilanordnung 10 weist in diesem Ausführungsbeispiel eine erste ABS-Ventileinheit 12 und eine zweite ABS-Ventileinheit 14 auf. Die erste ABS-Ventileinheit 12 empfängt den Feststellbremsdruck pF und stellt den ersten Bremsdruck pB1 für mindestens den ersten Federspeicherbremszylinder 208a an wenigstens einem ersten Kanal 16a bereit. Der erste Kanal 16a ist in dem in Fig. 1 gezeigten Ausführungsbeispiel mit dem ersten Federspeicherbremszylinder 208a verbunden. In ähnlicher Weise empfängt die zweite ABS-Ventileinheit 14 den Feststellbremsdruck pF und stellt den zweiten Bremsdruck pB2 für mindestens den zweiten Federspeicherbremszylinder 208b an einem zweiten Kanal 16b bereit. Der zweite Kanal 16b ist in diesem Ausführungsbeispiel mit dem zweiten Federspeicherbremszylinder 208b verbunden. Es soll verstanden werden, dass die ersten und zweiten Kanäle 16a, 16b auch mit einem oder weiteren Federspeicherbremszylindern oder anderen Verbrauchern verbunden sein können. Insbesondere ist es nicht erforderlich, dass die ersten und zweiten Federspeicherbremszylinder 208a, 208b an einer Achse, wie in Fig. 1 gezeigt, angeordnet sind. Beispielsweise ist auch denkbar, dass der zweite Federspeicherbremszylinder 208b an einer Vorderachse angebracht ist oder umgekehrt.

Die ersten und zweiten ABS-Ventileinheiten 12, 14 sind in diesem Ausführungsbeispiel (Fig.1) jeweils über erste und zweite Feststellbremsdruckleitungen 18a, 18b mit dem Feststellbremsdruckanschluss 8 verbunden. Dazu verzweigen sich die ersten und zweiten Feststellbremsdruckleitungen 18, 18b. Die erste Feststellbremsdruckleitung 18a ist mit einem ersten Feststellbremsdruckeingang verbunden. Die zweite Feststellbremsdruckleitung 18b ist mit einem zweiten Feststellbremsdruckeingang 19b der zweiten ABS-Ventileinheit 14 verbunden.

Es soll verstanden werden, dass in anderen Ausführungsbeispielen, auch ein zweiter Feststellbremsdruckanschluss 8 an der Feststellbremseinheit 2 vorgesehen sein kann, sodass jeweils die ersten und zweiten ABS-Ventileinheiten mit eigenen Feststellbremsdruckanschlüssen verbunden sind. Ebenso ist es möglich, dass die ersten und zweiten ABS-Ventileinheiten 12, 14 direkt mit der Feststellbremseinheit 2 integriert sind und insofern die ersten und zweiten Feststellbremsdruckleitungen 18a, 18b entfallen können.

Die ersten und zweiten ABS-Ventileinheiten 12, 14 sind so ausgebildet, dass diese in Abhängigkeit von empfangenen ersten und zweiten ABS-Signalen S1, S2 den empfangenen Feststellbremsdruck pF so variieren, dass die entsprechenden ersten und zweiten Bremsdrücke pB1, pB2 bereitgestellt werden.

Die ersten und zweiten ABS-Signale S1, S2 werden in dem gezeigten Ausführungsbeispiel von einer ABS-Steuereinheit 22 bereitgestellt. Diese ABS-Steuereinheit 22 empfängt vorzugsweise Daten und Signale von Raddrehzahlsensoren an der Achse, der die ersten und zweiten Federspeicherbremszylinder 208a, 208b zugeordnet sind. Auf diese Weise ist die ABS-Steuereinheit 22 vorzugsweise dazu ausgebildet, selbsttätig die Schlupfregelung durchzuführen. Zusätzlich kann vorgesehen sein, dass ABS-Steuereinheit 22 einen Redundanzanschluss 230 aufweist, über den diese mit einem Fahrzeug-BUS 250 verbunden ist, um von diesem beispielsweise ein Redundanzsignal SR zu empfangen, das angibt, dass die ersten und zweiten Federspeicherbremszylinder 208a, 208b zum redundanten Einbremsen der entsprechenden Achse eingesetzt werden. Mittels des Redundanzsignals SR kann beispielsweise die ABS-Steuereinheit 22 aktiviert werden. Darüber hinaus ist auch denkbar, dass die ABS-Steuereinheit 22 über den Redundanzanschluss 230 auch Signale von Raddrehzahlsensoren über den Fahrzeug-BUS 250 erhält. In diesem Fall ist es nicht erforderlich, dass die ABS-Steuereinheit 22 selbsttätig diese Signale empfängt, beispielsweise über eine redundante direkte Verkabelung.

In dem in Fig. 1 gezeigten Ausführungsbeispiel weist die erste ABS-Ventileinheit 12 eine erste ABS-Vorsteuereinheit 30 zum Aussteuern eines ersten und eines zweiten Steuerdrucks p1, p2 sowie eine erste ABS-Hauptventileinheit 34 auf, die die entsprechenden ersten und zweiten Steuerdrücke p1, p2 empfängt. Die zweite ABS-Ventileinheit 14 weist in übereinstimmender Weise eine zweite ABS-Vorsteuereinheit 32 zum Aussteuern eines dritten und eines vierten Steuerdrucks p3, p4 auf sowie eine zweite ABS-Hauptventileinheit 36 auf, die die entsprechenden dritten und vierten Steuerdrücke p3, p4 empfängt. Insgesamt sind die ersten und zweiten ABS-Ventileinheiten 12, 14 in ihrem Layout in diesem Ausführungsbeispiel identisch ausgebildet.

Im Einzelnen weist die erste ABS-Vorsteuereinheit 30 ein erstes Einlass-Vorsteuerventil 40 auf, das dazu ausgebildet ist, den ersten Steuerdruck p1 auszusteuern. Das erste Einlass-Vorsteuerventil 40 ist in dem gezeigten Ausführungsbeispiel (Fig. 1) als 3/2-Wege-Ventil ausgebildet und weist einen ersten Einlass-Vorsteuerventilanschluss 40.1, einen zweiten Einlass-Vorsteuerventilanschluss 40.2 und einen dritten Einlass-Vorsteuerventilanschluss 40.3 auf. Der erste Einlass-Vorsteuerventilanschluss 40.1 ist mit dem ersten Feststellbremsdruckeingang 19a verbunden und empfängt so den Feststellbremsdruck pF. Der zweite Einlass-Vorsteuerventilanschluss 40.2 ist mit der ersten ABS-Hauptventileinheit 34 verbunden, und der dritte Einlass-Vorsteuerventilanschluss 40.3 ist mit einer Entlüftung 7 der ersten ABS-Ventileinheit 12 verbunden. Das erste Einlass-Vorsteuerventil 40 ist stromlos in der in Fig. 1 gezeigten ersten Schaltstellung, in der der zweite Einlass-Vorsteuerventilanschluss 40.2 mit dem dritten Einlass-Vorsteuerventilanschluss 40.3 verbunden ist, sodass der zweite Einlass-Vorsteuerventilanschluss 40.2 mit der Entlüftung 7 verbunden ist. Durch Bereitstellen des ersten ABS-Signals S1 schaltet das erste Einlass-Vorsteuerventil 40 von der in Fig. 1 gezeigten ersten Schaltstellung in die in Fig. 1 nicht gezeigte zweite Schaltstellung, sodass dann der am ersten Feststellbremsdruckeingang 19a anliegende Feststellbremsdruck pF durch das erste Einlass-Vorsteuerventil 40 durchgesteuert wird und als erster Steuerdruck p1 an der ersten ABS-Hauptventileinheit 34 bereitgestellt wird. Genauer gesagt wird der erste Steuerdruck p1 an einem ersten pneumatisch schaltbaren Einlass-Hauptventil 44 der ersten ABS-Hauptventileinheit 34 bereitgestellt. Das erste Einlass-Hauptventil 44 ist als pneumatisch schaltbares 2/2-Wege-Ventil ausgebildet und weist einen ersten Einlass-Hauptventilanschluss 44.1 und einen zweiten Einlass-Hauptventilanschluss 44.2 auf. Der erste Einlass-Hauptventilanschluss 44.1 ist wiederum mit dem ersten Feststellbremsdruckeingang 19a verbunden, sodass dieser den Feststellbremsdruck pF empfängt. Der zweite Einlass-Hauptventilanschluss 44.2 ist mit dem ersten Kanal 16a verbunden, sodass dieser den ersten Bremsdruck pB1 aussteuern kann. Der erste Steuerdruck p1 wird an einem ersten Steueranschluss 44.3 des ersten Einlass-Hauptventils 44 bereitgestellt. Solange der erste Steuerdruck p1 unter einem ersten Schwellwert bleibt, ist das erste Einlass-Hauptventil 44 in der in Fig. 1 gezeigten offenen Schaltstellung. Sobald der erste Steuerdruck p1 diesen ersten Schwellwert überschreitet, schaltet das erste Einlass-Hauptventil 44 in die zweite in Fig. 1 nicht gezeigte Schaltstellung, in der die ersten und zweiten Einlass-Hauptventilanschlüsse 44.1, 44.2 getrennt sind. Das heißt, solange der erste Steuerdruck p1 unter dem ersten Schwellwert bleibt, wird der Feststellbremsdruck pF von dem ersten Feststellbremsdruckeingang 19a durch das erste Einlass-Hauptventil 44 durchgesteuert und in dem ersten Kanal 16a bereitgestellt.

Neben dem ersten Einlass-Vorsteuerventil 40 weist die erste ABS-Vorsteuereinheit 30 auch ein erstes Auslass-Vorsteuerventil 42 auf. Das erste Auslass-Vorsteuerventil 42 ist ebenso wie das erste Einlass-Vorsteuerventil 40 als 3/2-Wege-Ventil ausgebildet und weist einen ersten Auslass-Vorsteuerventilanschluss 42.1, einen zweiten Auslass-Vorsteuerventilanschluss 42.2 und einen dritten Auslass-Vorsteuerventilanschluss 42.3 auf. Der erste Auslass-Vorsteuerventilanschluss 42.1 ist mit der Entlüftung 7 verbunden. Der zweite Auslass-Vorsteuerventilanschluss 42.2 ist mit der ersten ABS-Hauptventileinheit 34 verbunden und der dritte Auslass-Vorsteuerventilanschluss 42.3 ist mit dem ersten Feststellbremsdruckeingang 19a verbunden und empfängt somit den Feststellbremsdruck pF. Stromlos ist das erste Auslass-Vorsteuerventil 42 in der in Fig. 1 gezeigten ersten Schaltstellung, in der der zweite Auslass-Vorsteuerventilanschluss 42.2 mit dem dritten Auslass-Vorsteuerventilanschluss 42.3 verbunden ist, sodass der Feststellbremsdruck pF als zweiter Steuerdruck p2 von dem zweiten Auslass-Vorsteuerventilanschluss 42.2 an der ersten ABS-Hauptventileinheit 34 bereitgestellt wird.

Genauer gesagt wird der zweite Steuerdruck p2 an einem ersten pneumatisch schaltbaren Auslass-Hauptventil 46 bereitgestellt. Das erste Auslass-Hauptventil 46 dient zum Entlüften des ersten Kanals 16a. Es ist, wie auch das erste Einlass-Hauptventil 44, als pneumatisch schaltbares 2/2-Wege-Ventil ausgebildet und weist einen ersten Auslass-Hauptventilanschluss 46.1 auf, der mit dem ersten Kanal 16a verbunden ist, und einen zweiten Auslass-Hauptventilanschluss 46.2, der mit der Entlüftung 7 verbunden ist. Der zweite Steuerdruck p2 wird an einem zweiten Steueranschluss 46.3 des ersten Auslass-Hauptventils 46 bereitgestellt. Das erste Auslass-Hauptventil 46 ist so gebildet, dass es, wenn der zweite Steuerdruck p2 einen zweiten Schwellwert unterschreitet, in einer offenen Schaltstellung ist, und sobald der zweite Steuerdruck den zweiten Schwellwert überschreitet, in eine geschlossene Schaltstellung schaltet.

In einem Ausgangszustand, wenn kein erstes ABS-Signal S1 bereitgestellt ist, und auch kein Feststellbremsdruck pF ausgesteuert ist, sind die Ventile in der in Fig. 1 gezeigten Schaltstellung. Sobald nun ein Feststellbremsdruck pF bereitgestellt wird, wird dieser über das erste Auslass-Vorsteuerventil 42 bereitgestellt, sodass der zweite Steuerdruck p2 ausgesteuert wird. Infolgedessen schaltet das erste Auslass-Hauptventil 46 in die zweite in Fig. 1 nicht gezeigte geschlossene Schaltstellung, sodass der Feststellbremsdruck pF von dem ersten Feststellbremsdruckeingang 19a bis in den ersten Kanal 16a durchgesteuert werden kann. Der erste Federspeicherbremszylinder 208a wird in der Folge entlüftet.

Um nun abweichend hiervon eine gepulste Belüftung zu erreichen, muss, wenn der Feststellbremsdruck pF ausgesteuert wird, das erste Einlass-Hauptventil 44 geschlossen werden, sodass der Feststellbremsdruck pF nicht direkt an dem ersten Federspeicherbremszylinder 208a ausgesteuert werden kann, sondern nur dann, wenn das erste Einlass-Hauptventil 44 geöffnet wird. Durch entsprechende Bereitstellung des ersten ABS-Signals S1 können dann also das erste Einlass-Vorsteuerventil 40 sowie das erste Auslass-Vorsteuerventil 42 geschaltet werden, sodass infolgedessen sowohl der erste Feststellbremsdruckeingang 19a gegenüber dem ersten Kanal 16a abgesperrt ist, andererseits der erste Kanal 16a über das erste Auslass-Hauptventil 46 mit der Entlüftung 7 verbunden ist, sodass der erste Federspeicherbremszylinder 208a entlüftet wird und ein Blockieren des entsprechend zugeordneten Rads verhindert wird.

Die zweite ABS-Ventileinheit 14 ist identisch zu der ersten ABS-Ventileinheit 12 aufgebaut und weist ein zweites Einlass-Vorsteuerventil 50, mit einem vierten Einlass-Vorsteuerventilanschluss 50.1, einem fünften Einlass-Vorsteuerventilanschluss 50.2 und einem sechsten Einlass-Vorsteuerventilanschluss 50.3. Der vierte Einlass-Vorsteuerventilanschluss 50.1 ist mit dem zweiten Feststellbremsdruckeingang 19b verbunden und empfängt den Feststellbremsdruck pF. Der fünfte Einlass-Vorsteuerventilanschluss 50.2 ist mit der zweiten ABS-Hauptventileinheit 36 verbunden, in diesem Ausführungsbeispiel genauer gesagt mit einem zweiten pneumatisch schaltbaren Einlass-Hauptventil 54. Der sechste Einlass-Vorsteuerventilanschluss 50.3 ist wiederum mit einer Entlüftung 7 verbunden. Das zweite Einlass-Hauptventil 54 ist wiederum als 2/2-Wege-Ventil ausgebildet und weist einen dritten Einlass-Hauptventilanschluss 54.1 auf, der mit dem zweiten Feststellbremsdruckeingang 19b verbunden ist sowie einen vierten Einlass-Hauptventilanschluss 54.2, der mit dem zweiten Kanal 16b verbunden ist. Das pneumatisch schaltbare zweite Einlass-Hauptventil 54 weist darüber hinaus einen dritten Steueranschluss 54.3 auf, an dem der dritte Steuerdruck p3 durch das zweite Einlass-Vorsteuerventil 50 ausgesteuert wird, sofern dieses in der zweiten in Fig. 1 nicht gezeigten Schaltstellung ist.

Wiederum in Übereinstimmung mit der ersten ABS-Ventileinheit 12, weist die zweite ABS-Ventileinheit 14 auch ein zweites Auslass-Vorsteuerventil 52 auf, welches wiederum als 3/2-Wege-Ventil ausgebildet ist. Es weist einen vierten Auslass-Vorsteuerventilanschluss 52.1 auf, der wiederum mit der Entlüftung 7 verbunden ist, einen fünften Auslass-Vorsteuerventilanschluss 52.2, der mit der zweiten ABS-Hauptventileinheit 36 verbunden ist, genauer gesagt, mit einem zweiten pneumatisch schaltbaren Auslass-Hauptventil 56 zum Bereitstellen des vierten Steuerdrucks p4, sowie einen sechsten Auslass-Vorsteuerventilanschluss 52.3, der mit dem zweiten Feststellbremsdruckeingang 19b verbunden ist. Das zweite Einlass-Vorsteuerventil 50 und das zweite Auslass-Vorsteuerventil 52 werden auf Basis des zweiten ABS-Signals S2 geschaltet. Wiederum kann durch entsprechende Schaltung dieser Signale der bereitgestellte zweite Bremsdruck pB2 in dem zweiten Kanal 16b unterhalb des Feststellbremsdrucks pF geregelt werden, um ein Blockieren des zweiten Federspeicherbremszylinders 208b zu verhindern.

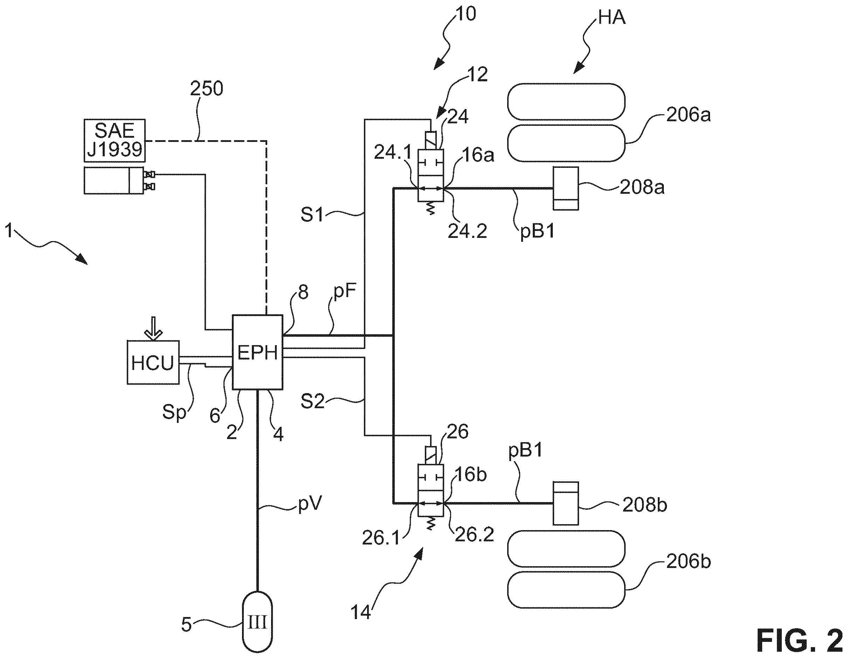

Fig. 2 zeigt nun ein vereinfachtes Ausführungsbeispiel. Gleiche und ähnliche Elemente sind mit denselben Bezugszeichen wie in Fig. 1 bezeichnet und insofern wird vollumfänglich auf die obige Beschreibung Bezug genommen. Im Folgenden werden in erster Linie die Unterschiede zum ersten Ausführungsbeispiel hervorgehoben, während Gemeinsamkeiten nicht weiter betont werden.

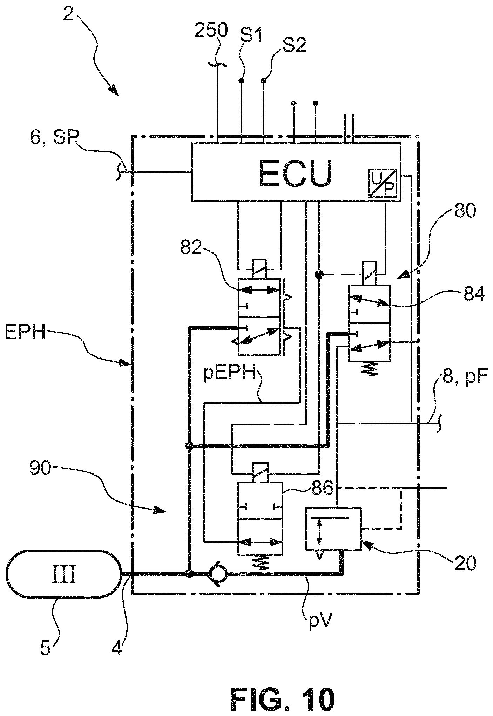

Ein erster Unterschied zum ersten Ausführungsbeispiel liegt darin, dass die Feststellbremseinheit 2 in der in Fig. 2 gezeigten Ausführungsform als ein elektropneumatisches Feststellbremsmodul EPH mit darin integrierter EPH-Steuereinheit ECU, einer EPH-Vorsteuerventileinheit 80 (vgl. Fig. 10) und einer EPH-Hauptventileinheit 90 (vgl. Fig. 10) ausgestattet ist. Eine mögliche Variante des Feststellbremsmoduls EPH ist in Fig. 10 gezeigt. Das dort gezeigte Feststellbremsmodul EPH weist eine EPH-Steuereinheit ECU auf sowie eine EPH-Vorsteuerventileinheit 80 und eine EPH-Hauptventileinheit 90. Die EPH-Vorsteuerventileinheit weist ein Einlass-Auslass-Ventil 82 sowie ein AnhängerSteuerventil 84 auf.

Das Einlass-Auslass-Ventil 82 ist mit dem Vorratsanschluss 4 verbunden und stellt, in Abhängigkeit seiner Schaltstellung einen EPH-Steuerdruck pEPH über ein Absperrventil 86 an dem Relais-Ventil 20 bereit, welches innerhalb des Feststellbremsmoduls EPH angeordnet ist. Das Relais-Ventil 20 empfängt ebenso in bekannter Weise Vorratsdruck pV von dem Vorratsanschluss 4 und steuert den Feststellbremsdruck pF an dem Feststellbremsdruckanschluss 8 aus. Die EPH-Steuereinheit ECU weist in dieser Ausführungsform den Bremswunschanschluss 6 auf, an dem ein Feststellbremswunsch SP bereitgestellt wird. In diesem Fall (vgl. Fig. 2) ist der Feststellbremswunsch SP ein Parkbremssignal SP, das von einem Parkbremsschalter HCU bereitgestellt wird. Darüber hinaus ist das Feststellbremsmodul EPH auch mit dem Fahrzeug-BUS 250 verbunden. Schließlich stellt die EPH-Steuereinheit ECU auch die ersten und zweiten ABS-Signale S1, S2 bereit (vgl. Fig. 2 sowie Fig. 10). Die ersten und zweiten ABS-Ventileinheiten 12, 14 weisen in dem in Fig. 2 gezeigten Ausführungsbeispiel lediglich erste und zweite ABS-Schaltventile auf. Das erste ABS-Schaltventil 24 weist einen ersten ABS-Schaltventilanschluss 24.1 auf, der mit dem Feststellbremsdruckanschluss 8 des Feststellbremsmoduls EPH verbunden ist. Weiterhin weist das erste ABS-Schaltventil 24 einen zweiten ABS-Schaltventilanschluss 24.2 auf, der mit dem ersten Kanal 16a verbunden ist. Das zweite ABS-Schaltventil 26 weist in übereinstimmender Weise einen dritten ABS-Schaltventilanschluss 26.1 auf, der mit dem Feststellbremsdruckanschluss 8 verbunden ist, sowie einen vierten ABS-Schaltventilanschluss 26.2, der mit dem zweiten Kanal 16b verbunden ist. Die ersten und zweiten ABS-Schaltventile 24, 26 sind stromlos in einer offenen in Fig. 2 gezeigten Schaltstellung. Durch Bereitstellung der ersten und zweiten ABS-Signale S1, S2 können die ersten ABS-Schaltventile 24, 26 in die zweite in Fig. 2 nicht gezeigte Schaltstellung gebracht werden, in der die ersten und zweiten ABS-Schaltventile 24, 26 geschlossen sind. Wenn der Feststellbremsdruck pF durch das Feststellbremsmodul EPH reduziert wird, um in dem in Fig. 2 gezeigten Ausführungsbeispiel die Hinterachse HA redundant oder regulär einzubremsen, können die ersten und zweiten ABS-Schaltventile 24, 26 gestuft geschlossen werden, um ein zu rasches Entlüften zu vermeiden, und so eine Schlupfregelung umzusetzen.

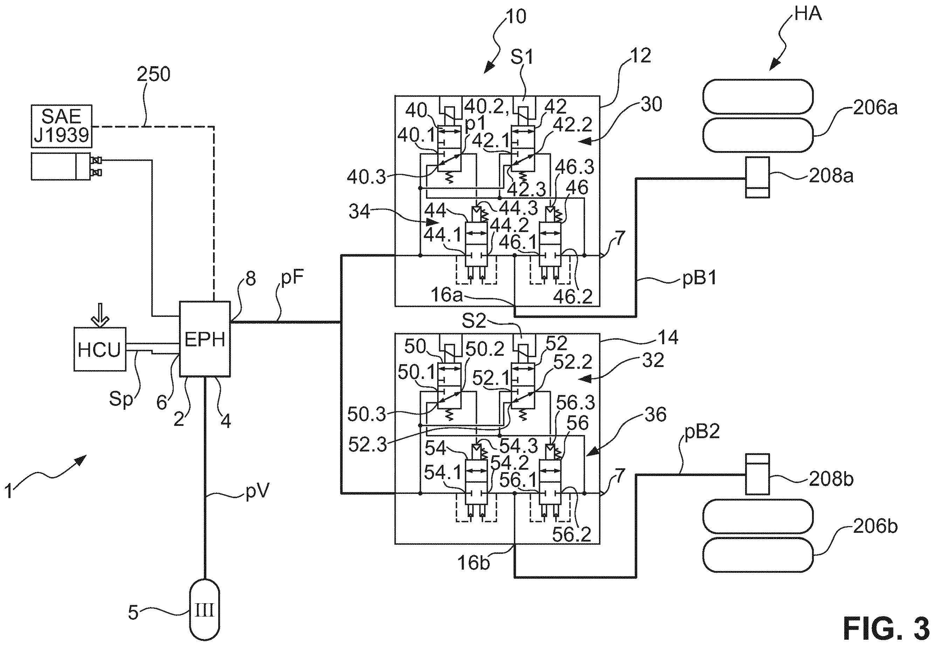

Ein drittes Ausführungsbeispiel der Feststellbremsanordnung 1 basiert gemäß Fig. 3 wiederum auf dem ersten Ausführungsbeispiel gemäß Fig. 1. Gleiche und ähnliche Elemente sind mit den gleichen Bezugszeichen wie in den ersten beiden Ausführungsbeispielen versehen, sodass vollumfänglich auf die obige Beschreibung Bezug genommen wird. Im Folgenden werden insbesondere die Unterschiede zum ersten Ausführungsbeispiel hervorgehoben.

Die ersten und zweiten ABS-Ventileinheiten 12, 14 sind im Wesentlichen identisch zu dem Ausführungsbeispiel gemäß Fig. 1 ausgebildet, wobei in Abweichung zu dem in Fig. 1 dargestellten Ausführungsbeispiel die ersten und zweiten ABS-Hauptventileinheiten 34, 36 stromlos geschlossen sind.

Der wesentliche Unterschied im dritten Ausführungsbeispiel liegt in der Gestaltung der ersten und zweiten pneumatisch schaltbaren Einlass-Hauptventile 44, 54 und der ersten und zweiten pneumatisch schaltbaren Auslass-Hauptventile 46, 56. Während diese in Figur 1 federbelastet in eine offene Schaltstellung (in Fig. 1 gezeigt) vorgespannt sind, weisen diese Ventile in dem dritten Ausführungsbeispiel eine pneumatische Rückkopplung auf, um eine geschlossene Stellung bei Anliegen von Druck aufrechterhalten zu können. Federbelastet sind diese Ventile zwar auch in die offene (in Fig. 3 nicht gezeigte) Schaltstellung, sobald aber ein Druck an einem der Anschlüsse anliegt, wird das entsprechende Ventil in die geschlossene (in Fig. 3 gezeigte) Schaltstellung belastet, sodass eine Halten-Stellung eingenommen werden kann.

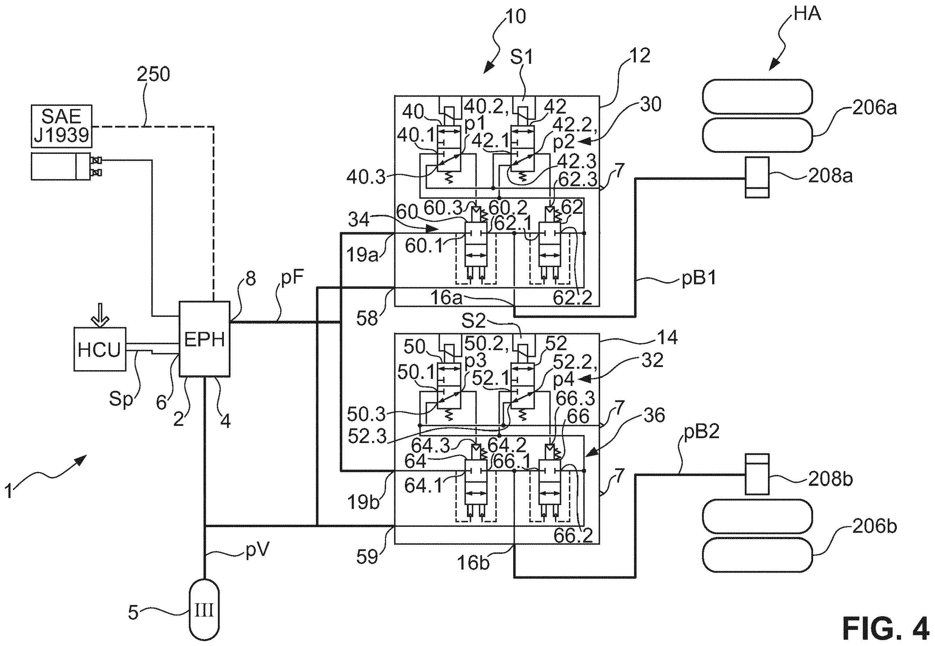

Im vierten Ausführungsbeispiel gemäß Fig. 4 sind wiederum gleiche und ähnliche Elemente mit den gleichen Bezugszeichen wie in den ersten drei Ausführungsbeispielen versehen, sodass vollumfänglich auf die obige Beschreibung Bezug genommen wird. Grundsätzlich basiert das vierte Ausführungsbeispiel (Fig. 4) auf dem dritten Ausführungsbeispiel (Fig. 3), sodass wiederum im Wesentlichen die Unterschiede zum dritten Ausführungsbeispiel hervorgehoben werden.

Ein erster Unterschied in dem vierten Ausführungsbeispiel liegt darin, dass die erste ABS-Ventileinheit 12 einen ersten ABS-Vorratsanschluss 58 zum Empfangen des Vorratsdrucks pV und die zweite ABS-Ventileinheit 14 einen zweiten ABS-Vorratsanschluss 59 zum Empfangen des Vorratsdrucks pV aufweist. Der Vorratsdruck pV des Druckluftvorrats 5 wird in diesem Ausführungsbeispiel also nicht nur der Feststellbremseinheit 2 zugeführt, sondern darüber hinaus auch separat und direkt den ersten und zweiten ABS-Ventileinheiten 12, 14. Auf diese Weise soll erreicht werden, dass ein Belüften der ersten und zweiten Federspeicherbremszylinder 208a, 208b nicht nur bis zu der Höhe des von der Feststellbremseinheit 2 ausgesteuerten Feststellbremsdrucks pF möglich ist, sondern auch ein Belüften über diesen Druck hinaus.

Um dies zu erreichen, ist auch die Verschaltung der einzelnen Ventile und Anordnungen dieser innerhalb der ersten und zweiten ABS-Ventileinheiten 12, 14 angepasst.

Die ersten und zweiten ABS-Vorsteuereinheiten 30, 32 sind ebenfalls zunächst identisch zum ersten und dritten Ausführungsbeispiel ausgebildet. Allerdings unterscheiden sich die ersten und zweiten ABS-Hauptventileinheiten 34, 36.

Die erste ABS-Hauptventileinheit 34 gemäß dem vierten Ausführungsbeispiel (Fig. 4) weist ein erstes pneumatisch schaltbares EPH-Hauptventil 60 zum Aussteuern des Feststellbremsdrucks pF an den ersten Kanal 16a auf sowie ein erstes pneumatisch schaltbares Vorrats-Hauptventil 62 zum Aussteuern des Vorratsdrucks pV an den ersten Kanal 16a. In übereinstimmender Weise weist die zweite ABS-Hauptventileinheit 36 ein zweites pneumatisch schaltbares EPH-Hauptventil 64 zum Aussteuern des Feststellbremsdrucks pF an den zweiten Kanal 16b sowie ein zweites pneumatisch schaltbares Vorrats-Hauptventil 66 zum Aussteuern des Vorratsdrucks pV an den zweiten Kanal 16b auf.

Das erste pneumatisch schaltbare EPH-Hauptventil 60 weist einen ersten EPH-Hauptventilanschluss 60.1 auf, der mit dem ersten Feststellbremsdruckeingang 19a verbunden ist und so den Feststellbremsdruck pF empfängt. Weiterhin weist das erste EPH-Hauptventil 60 einen zweiten EPH-Hauptventilanschluss 60.2 auf, der mit dem ersten Kanal 16a verbunden ist. Da das erste EPH-Hauptventil 60 als pneumatisch schaltbares Ventil ausgebildet ist, weist dieses darüber hinaus einen fünften Steueranschluss 60.3 auf, der den ersten Steuerdruck p1 empfängt. Das erste EPH-Hauptventil 60 ist so ausgebildet, dass es aufgrund des ausgesteuerten Feststellbremsdrucks pF automatisch in die offene in Fig. 4 nicht gezeigte Schaltstellung schaltet, und durch Bereitstellen des ersten Steuerdrucks p1 in eine geschlossene, in Fig. 4 gezeigte Schaltstellung verbringbar ist. Das erste pneumatisch schaltbare Vorrats-Hauptventil 62 ist ebenfalls als pneumatisch schaltbares 2/2-Wege-Ventil ausgebildet und weist einen ersten Vorrats-Hauptventilanschluss 62.1 auf, der mit dem ersten Kanal 16a verbunden ist, und einen zweiten Vorrats-Hauptventilanschluss 62.2, der mit dem ersten ABS-Vorratsanschluss 58 verbunden ist und somit den Vorratsdruck pV empfängt. Auch das erste Vorrats-Hauptventil 62 ist so ausgebildet, dass es aufgrund einer Bereitstellung des Vorratsdrucks pV automatisch in die offene, in Fig. 4 nicht gezeigte Schaltstellung schaltet, und basierend auf der Bereitstellung des zweiten Steuerdrucks p2 an einem sechsten Steueranschluss 62.3 des ersten Vorrats-Hauptventil 62 in die erste in Fig. 4 gezeigte Schaltstellung, die geschlossen ist, geschaltet werden kann. Auf diese Weise lässt sich beispielsweise durch Bereitstellung des ersten Steuerdrucks p1 das erste pneumatisch schaltbare EPH-Hauptventil 60 schließen, während das erste pneumatisch schaltbare Vorrats-Hauptventil 62 offen bleibt und somit der Vorratsdruck pV direkt von dem ersten ABS-Vorratsanschluss 58 über das erste pneumatisch schaltbare Vorrats-Hauptventil 62 an dem ersten Kanal 16a aussteuerbar ist, um die entsprechend zugeordneten ersten Federspeicherbremszylinder 208a zu belüften und somit zu lösen. Dieses Belüften kann ebenso gestuft erfolgen, durch entsprechende Bereitstellung des ersten ABS-Signals S1.

Die zweite ABS-Ventileinheit 14 ist in identischer Weise ausgebildet und weist in der zweiten ABS-Hauptventileinheit 36 ein zweites pneumatisch schaltbares EPH-Hauptventil 64 auf, mit einem dritten EPH-Hauptventilanschluss 64.1, der mit dem zweiten Feststellbremsdruckeingang 19b verbunden ist, einen vierten EPH-Hauptventilanschluss 64.2, der mit dem zweiten Kanal 16b verbunden ist und einen siebten Steueranschluss 64.3, der den dritten Steuerdruck p3 empfängt. Ferner weist die zweite ABS-Hauptventileinheit 36 gemäß diesem vierten Ausführungsbeispiel (Fig.4) ein zweites pneumatisch schaltbares Vorrats-Hauptventil 66 auf, das einen dritten Vorrats-Hauptventilanschluss 66.1 aufweist, der mit dem zweiten Kanal 16b verbunden ist, einen vierten Vorrats-Hauptventilanschluss 66.2, der mit dem zweiten ABS-Vorratsanschluss 59 verbunden ist sowie einen achten Steueranschluss 66.3, der den vierten Steuerdruck empfängt. Die Arbeitsweise der zweiten ABS-Ventileinheit 14 ist identisch zu der ersten ABS-Ventileinheit 12 gemäß diesem vierten Ausführungsbeispiel (Fig. 4).

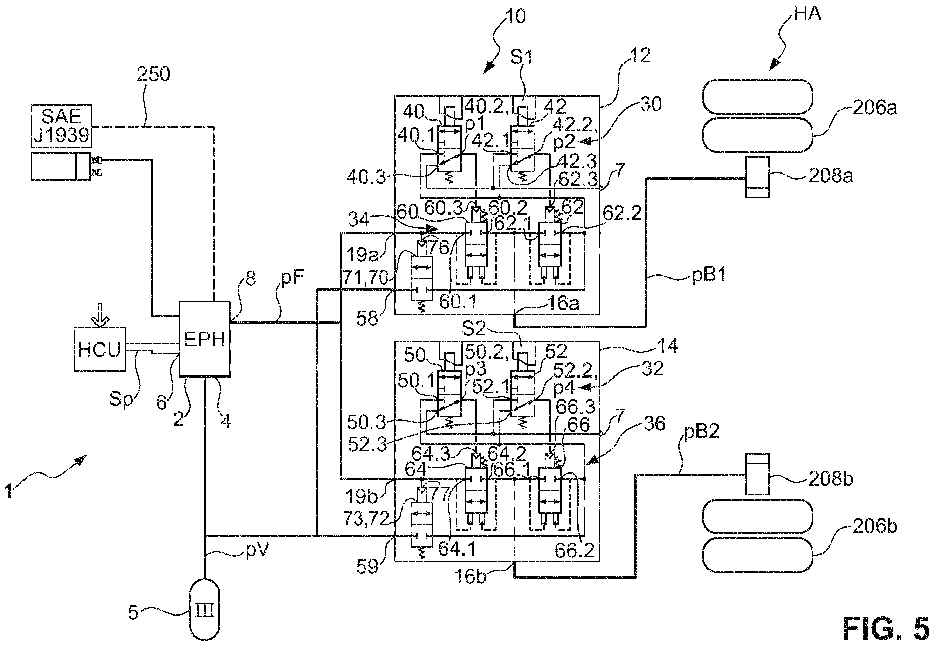

In dem in Fig.5 gezeigten fünften Ausführungsbeispiel sind wiederum gleiche Elemente mit gleichen Bezugszeichen wie in den vorherigen Ausführungsbeispielen versehen, sodass vollumfänglich auf die obige Beschreibung Bezug genommen wird. Das fünfte Ausführungsbeispiel gemäß Fig. 5 basiert auf dem vierten Ausführungsbeispiel gemäß Fig. 4, mit dem Unterschied, dass erste und zweite ABS-Absperrventile 70, 72 vorgesehen sind. So weist die erste ABS-Ventileinheit 12 ein erstes ABS-Absperrventil 70 auf, das als 2/2-Wege-Ventil 71 ausgebildet ist. Es ist in die pneumatische Leitung nach den entsprechenden ersten und zweiten ABS-Vorratsanschlüssen 58, 59 eingesetzt, sodass mittels der ersten und zweiten ABS-Absperrventile 70, 72 der Vorratsdruck pV ausgesperrt werden kann. Sind die ersten und zweiten ABS-Absperrventile 70, 72 in der in Fig. 5 gezeigten ersten offenen Schaltstellung, kann der Vorratsdruck pV nicht durch die ersten und zweiten ABS-Ventileinheiten 12, 14 durchgesteuert werden, sodass eine Belüftung der ersten und zweiten Federspeicherbremszylinder 208a, 208b über den bereitgestellten Feststellbremsdruck pF hinaus nicht möglich ist. Die ersten und zweiten ABS-Absperrventile 70, 72 weisen jeweils einen ersten bzw. zweiten Absperr-Steueranschluss 76, 77 auf, die jeweils den Feststellbremsdruck pF empfangen. Zu diesem Zweck sind die ersten und zweiten Absperrsteueranschlüsse 76, 77 mit einer pneumatischen Leitung verbunden, die vom ersten bzw. zweiten Feststellbremsdruckeingang 19a, 19b zum ersten bzw. zweiten EPH-Hauptventil 60, 64 verläuft. Sobald also der Feststellbremsdruck pF einen vorbestimmten Schwellwert überschreitet, schalten die ersten und zweiten Absperrventile 70, 72 in die zweite in Fig. 5 nicht gezeigte offene Schaltstellung, sodass der Vorratsdruck pV an den ersten und zweiten Vorrats-Hauptventilen 62, 66 ausgesteuert werden kann. Auf diese Weise lässt sich insbesondere ein Belüften der ersten und zweiten Federspeicherbremszylinder 208a, 208b rascher durchführen, da neben dem Feststellbremsdruck pF auch Vorratsdruck pV genutzt werden kann, um diese zu belüften.

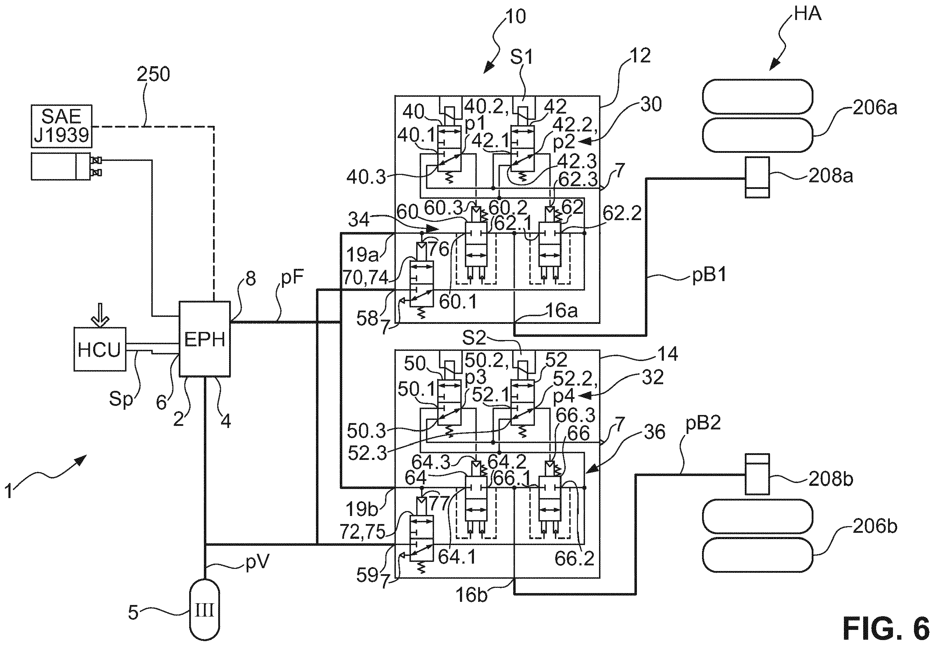

Das in Fig. 6 gezeigte sechste Ausführungsbeispiel basiert auf dem in Fig. 5 gezeigten fünften Ausführungsbeispiel, wobei nachfolgend insbesondere die Unterschiede zum fünften Ausführungsbeispiel beschrieben sind. Der einzige Unterschied zwischen dem fünften Ausführungsbeispiel (Fig. 5) und dem sechsten Ausführungsbeispiel (Fig. 6) liegt darin, dass die ersten und zweiten ABS-Absperrventile 70, 72 als erste und zweite pneumatisch schaltbare 3/2-WegeVentile ausgebildet sind. Der dadurch zusätzlich geschaffene Anschluss an den ersten und zweiten ABS-Absperrventilen 70, 72 ist in dem Ausführungsbeispiel dann mit einer Entlüftung 7 verbunden, sodass in der ersten in Fig. 6 gezeigten Schaltstellung nicht nur kein Vorratsdruck pV an den ersten und zweiten Vorrats-Hauptventilen 62, 66 ausgesteuert werden kann, sondern diese vielmehr mit der Entlüftung 7 verbunden sind. Auf diese Weise lassen sich die Federspeicherbremszylinder 208a, 208b auch zusätzlich entlüften.

Die Figuren 7 bis 9 zeigen nun drei verschiedene Ausführungsbeispiele eines elektronisch steuerbaren pneumatischen Bremssystems 204 für ein Fahrzeug 200, nämlich insbesondere ein Nutzfahrzeug 202.

Ein solches elektronisch steuerbares pneumatisches Bremssystem 204 weist einen Hinterachsbremskreis 210, einen Vorderachsbremskreis 212 und einen Feststellbremskreis 214 auf (vgl. Fig. 7). Der Feststellbremskreis 214 ist hier der Hinterachse HA zugeordnet, kann aber ebenso auch anderen Achsen, insbesondere Zusatzachsen, zugeordnet sein. In dem Hinterachsbremskreis 214 ist eine Feststellbremsanordnung 1 vorgesehen, die wie vorstehend beschrieben ausgebildet sein kann. Sie weist wiederum eine Feststellbremseinheit 2 auf, die hier als Feststellbremsmodul EPH ausgebildet ist und mit ersten und zweiten Federspeicherbremszylinder 208a, 208b an der Hinterachse HA verbunden ist. Die ersten und zweiten Federspeicherbremszylinder 208a, 208b sind in sogenannten Tristop-Bremszylindern untergebracht, die auch Betriebsbremszylinder 302a, 302b umfassen.

Gleiche und ähnliche Elemente sind wiederum mit gleichen Bezugszeichen wie in den vorherigen Ausführungsbeispielen benannt, sodass auf die obige Beschreibung vollumfänglich Bezug genommen wird.

Zum Steuern des elektronisch steuerbaren pneumatischen Bremssystems 204 ist ein Zentralmodul 300 vorgesehen, das in diesem Ausführungsbeispiel (Fig. 7) auch die Funktion eines Hinterachsmodulators übernimmt. Das Zentralmodul 300 ist mit dem Fahrzeug-BUS 250 verbunden und über diesen auch mit einer Einheit für autonomes Fahren 304, von der das Zentralmodul 300 Bremsanforderungssignale empfängt. Darüber hinaus ist das Zentralmodul 300 mit einem Bremswertgeber BST verbunden sowie mit einem ersten Druckluftvorrat 306, zum Aussteuern von Hinterachsbremsdrücken pBHA an den ersten und zweiten Betriebsbremszylindern 302a, 302b an der Hinterachse HA. Der erste Druckluftvorrat 306 ist dem Hinterachsbremskreis 210 zugeordnet. Der dem Feststellbremskreis 214 zugeordnete Druckluftvorrat 5 ist in diesem Ausführungsbeispiel ein dritter Druckluftvorrat.

Der Vorderachsbremskreis 212 wird von einem zweiten Druckluftvorrat 308 gespeist. Der Vorderachsbremskreis 212 weist einen Vorderachsmodulator 310 auf, der mit dem zweiten Druckluftvorrat 308 verbunden ist und von diesem Vorratsdruck pV empfängt. Der Vorderachsmodulator 310 ist über erste und zweite Vorderachs-ABS-Einheiten 312a, 312b mit entsprechenden Betriebsbremszylindern 314a, 314b an der Vorderachse VA verbunden, um an diesen einen Vorderachsbremsdruck pBVA schlupfgeregelt auszusteuern.

Weiterhin ist hier die Feststellbremseinheit 2 sowohl mit dem Parkbremsschalter HCU als auch mit dem Bremswertgeber BST verbunden, um von diesem Bremsanforderungssignale SP, SR2 zum empfangen. Über den Bremswertgeber BST empfängt das Feststellbremsmodul 2 ein zweites Redundanzsignal SR2, das weiter unten genau beschrieben wird.

Im normalen Fahrbetrieb empfängt die Zentraleinheit 300 von der Einheit für autonomes Fahren 304 Bremsanforderungssignale, die dann von der dem Zentralmodul 300 direkt in ein Hinterachsbremsdruck pBHA umgesetzt werden sowie n ein Vorderachssignal SVA, das von dem Zentralmodul 300 an dem Vorderachsmodulator 310 bereitgestellt wird, der daraufhin den Vorderachsbremsdruck pBVA aussteuert.

Für den Fall, dass eine solche Aussteuerung verhindert ist, beispielsweise weil das Zentralmodul 300 einen Defekt hat, kann in dieser Ausführungsform die Feststellbremseinheit 2 die Steuerung des Bremssystems 204 übernehmen. Dazu empfängt dann die Feststellbremseinheit 2 das zweite Redundanzsignal SR2 des Bremswertgebers BST, also beispielsweise eines Fußbremspedals. Dieses zweite Redundanzsignal SR2 wird von der Feststellbremseinheit 2 an dem Redundanzanschluss 230 empfangen. Die Feststellbremseinheit 2 setzt dieses Signal dann in einen Feststellbremsdruck pF um, der an dem Feststellbremsdruckanschluss 8 (in der in Fig. 7 gezeigten Ausführungsform geteilte Anschlüsse 8a, 8b) bereitgestellt wird. Gleichzeitig übernimmt die Feststellbremseinheit 2, die hier als Feststellbremsmodul EPH ausgebildet ist, die Steuerung der ersten und zweiten ABS-Ventileinheiten12, 14, um den ersten und zweiten Bremsdruck pB1, pB2 schlupfgeregelt an den ersten und zweiten Federspeicherbremszylindern 208a, 208b bereitzustellen, um so die Hinterachse HA redundant einzubremsen.

Um auch die Vorderachse VA redundant zu bremsen ist es einerseits möglich, einen von dem Bremswertgeber BST ausgesteuerten Redundanzdruck pR1 über ein Select-High-Ventil 316 an einem Redundanzanschluss 318 des Vorderachsmodulators 310 auszusteuern, oder durch das Feststellbremsmodul EPH einen zweiten Redundanzdruck pR2 über das Select-High-Ventil 316 an den Redundanzanschluss 318 des Vorderachsmodulators 310 auszusteuern. Das heißt, einerseits kann eine manuelle Aussteuerung über den Bremswertgeber BST erfolgen, andererseits auch eine automatisierte, über das Feststellbremsmodul EPH.

Sollte auch das Feststellbremsmodul EPH ausfallen, ist es in dieser Ausführungsform auch möglich, in einer weiteren Redundanzebene den vom Vorderachsmodulator 310 ausgesteuerten Vorderachsbremsdruck pBVA abzugreifen und als dritten Redundanzdruck pR3 an einem Redundanzanschluss 320 des Feststellbremsmoduls EPH bereitzustellen, um so auch die Hinterachse HA redundant zu bremsen.

Um eine Schlupfregelung an der Hinterachse HA mittels der ersten und zweiten ABS-Ventileinheiten 12, 14 umzusetzen, sind an der Hinterachse HA erste und zweite Raddrehzahlsensoren 322a, 322b vorgesehen. Diese sind in dem gezeigten Ausführungsbeispiel (Fig. 7) nur mit dem Zentralmodul 300 verbunden. Dieses empfängt von den ersten und zweiten Raddrehzahlsensoren 322a, 322b Raddrehzahlsignale SD1, SD2. Über eine direkte BUS-Verbindung 324 sind das Zentralmodul 300 und die Feststellbremseinheit EPH verbunden, sodass das Zentralmodul 300 in der Feststellbremseinheit EPH entsprechende Raddrehsignale SD1, SD2 bereitstellen kann, sodass die Feststellbremseinheit EPH dann die ersten und zweiten ABS-Ventileinheiten 12, 14 steuern kann, insbesondere durch Bereitstellung der ersten und zweiten ABS-Signale S1, S2.

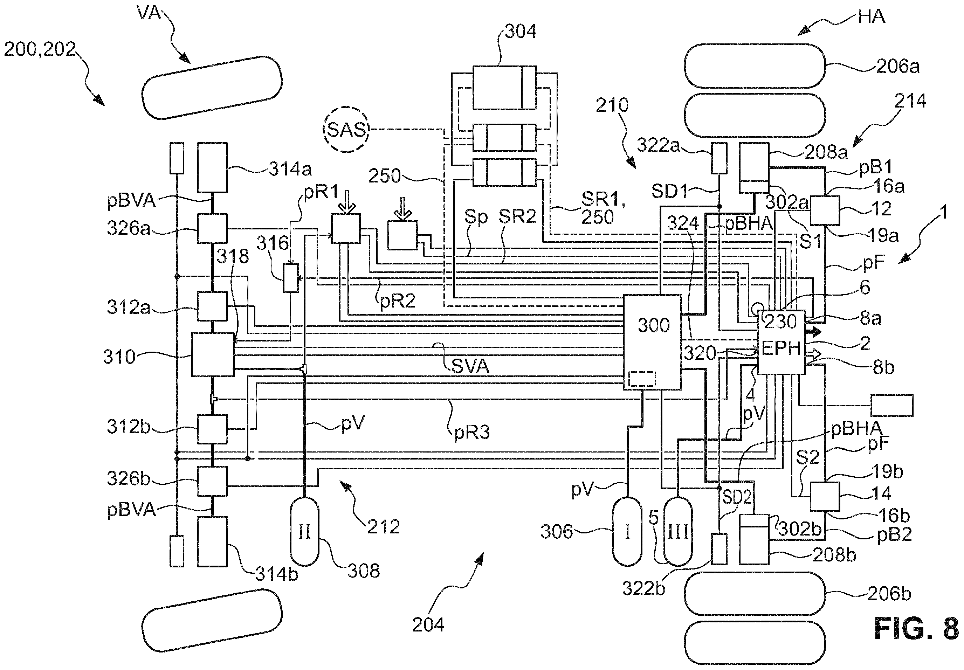

Das in Fig. 8 gezeigte Ausführungsbeispiel des Bremssystems 204 basiert im Wesentlichen auf dem in Fig. 7 gezeigten Ausführungsbeispiel, wobei nachstehend insbesondere die Unterschiede hervorgehoben sind. Ein erster Unterschied zum Ausführungsbeispiel gemäß Fig. 7 liegt darin, dass die ersten und zweiten Raddrehzahlsensoren 322a, 322b an der Hinterachse HA nicht nur mit dem Zentralmodul 300 verbunden sind, sondern über eine weitere Verkabelung mit dem Feststellbremsmodul EPH. Auf diese Weise kann das Feststellbremsmodul EPH direkt von den ersten und zweiten Raddrehzahlsensoren 322a, 322b die ersten und zweiten Drehzahlsignale SD1, SD2 erhalten, um dann im Falle eines Defekts des Zentralmoduls 300 eine redundante schlupfgeregelte Bremsung der Hinterachse HA zu erreichen.

Ein weiterer Unterschied liegt darin, dass an der Vorderachse VA neben den ersten und zweiten Vorderachs-ABS-Einheiten 312a, 312b erste und zweite redundante Vorderachs-ABS-Einheiten 326a, 326b vorgesehen sind. Diese sind dort angeordnet, um auch in einer redundanten Bremsung der Vorderachse VA eine Schlupfregelung umsetzen zu können. Während bei dem Ausführungsbeispiel gemäß Fig. 7 die ersten und zweiten Vorderachs-ABS-Einheiten 312a, 312b über entsprechende erste und zweite Verkabelungen sowohl mit dem Zentralmodul 300 als auch mit dem Feststellbremsmodul EPH verbunden sind und so von diesen Modulen gesteuert werden können, sind in dem Ausführungsbeispiel gemäß Fig. 8 die ABS-Einheiten der Vorderachse insgesamt redundant ausgebildet, sodass im Redundanzfall die ersten und zweiten Vorderachs-ABS-Einheiten 312a, 312b wirkungslos werden und die Schlupfregelung über die ersten und zweiten redundanten Vorderachs-ABS-Einheiten 326a, 326b erfolgt, die entsprechende Signale von dem Feststellbremsmodul EPH empfangen.

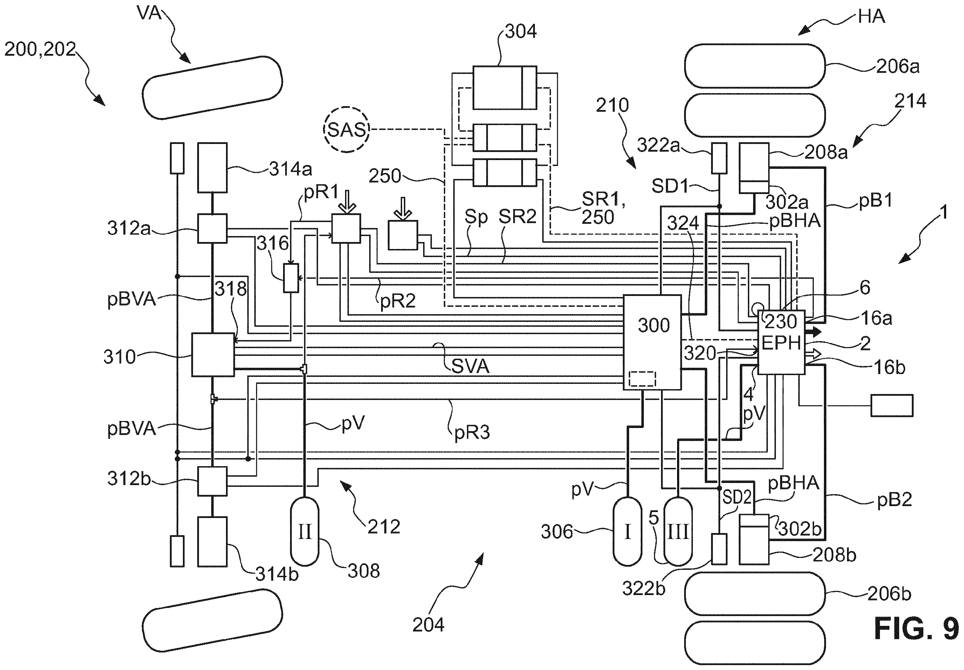

Das in Fig. 9 gezeigte dritte Ausführungsbeispiel eines Bremssystems 204 basiert sowohl auf dem ersten als auch auf dem zweiten Ausführungsbeispiel (Figuren 7 und 8). Die Vorderachse VA in dem dritten Ausführungsbeispiel (Fig. 9) ist im Wesentlichen entsprechend der Vorderachse VA im ersten Ausführungsbeispiel (Fig. 7) ausgebildet.

Ein wesentlicher Unterschied im dritten Ausführungsbeispiel (Fig. 9) liegt darin, dass die ersten und zweiten ABS-Ventileinheiten 12, 14 in das Feststellbremsmodul EPH integriert sind. Die Verkabelung der ersten und zweiten Raddrehzahlsensoren 322a, 322b an der Hinterachse HA ist entsprechend dem zweiten Ausführungsbeispiel (Fig. 8) ausgebildet.

### Bezugszeichenliste

- 1: Feststellbremsanordnung
- 2: Feststellbremseinheit
- 4: Vorratsanschluss
- 5: Druckluftvorrat
- 6: Bremswunschanschluss
- 8: Feststellbremsdruckanschluss
- 10: ABS-Ventilanordnung
- 12: erste ABS-Ventileinheit
- 14: zweite ABS-Ventileinheit
- 16a: erster Kanal
- 16b: zweiter Kanal
- 18a: erste Feststellbremsdruckleitung
- 18b: zweite Feststellbremsdruckleitung
- 19a: erster Feststellbremsdruckeingang
- 19b: zweiter Feststellbremsdruckeingang
- 20: Relaisventil
- 22: ABS-Steuereinheit
- 24: erstes ABS-Schaltventil
- 24.1: erster ABS-Schaltventilanschluss
- 24.2: zweiter ABS-Schaltventilanschluss
- 26: zweites ABS-Schaltventil
- 26.1: dritter ABS-Schaltventilanschluss
- 26.2: vierter ABS-Schaltventilanschluss
- 30: erste ABS-Vorsteuereinheit
- 32: zweite ABS-Vorsteuereinheit
- 34: erste ABS-Hauptventileinheit
- 36: zweite ABS-Hauptventileinheit
- 40: erstes Einlass-Vorsteuerventil
- 40.1: erster Einlass-Vorsteuerventilanschluss
- 40.2: zweiter Einlass-Vorsteuerventilanschluss
- 40.3: dritter Einlass-Vorsteuerventilanschluss
- 42: erstes Auslass-Vorsteuerventil
- 42.1: erster Auslass-Vorsteuerventilanschluss
- 42.2: zweiter Auslass-Vorsteuerventilanschluss
- 42.3: dritter Auslass-Vorsteuerventilanschluss
- 44: erstes pneumatisch schaltbares Einlass-Hauptventil
- 44.1: erster Einlass-Hauptventilanschluss
- 44.2: zweiter Einlass-Hauptventilanschluss
- 44.3: erster Steueranschluss
- 46: erstes pneumatisch schaltbares Auslass-Hauptventil
- 46.1: erster Auslass-Hauptventilanschluss
- 46.2: zweiter Auslass-Hauptventilanschluss
- 46.3: zweiter Steueranschluss
- 50: zweites Einlass-Vorsteuerventil
- 50.1: vierte Einlass-Vorsteuerventilanschluss
- 50.2: fünfter Einlass-Vorsteuerventilanschluss
- 50.3: sechster Einlass-Vorsteuerventilanschluss
- 52: zweites Auslass-Vorsteuerventil
- 52.1: vierter Auslass-Vorsteuerventilanschluss
- 52.2: fünfter Auslass-Vorsteuerventilanschluss
- 52.3: sechster Auslass-Vorsteuerventilanschluss
- 54: zweites pneumatisch schaltbares Einlass-Hauptventil
- 54.1: dritter Einlass-Hauptventilanschluss
- 54.2: vierter Einlass-Hauptventilanschluss
- 54.3: dritter Steueranschluss
- 56: zweites pneumatisch schaltbares Auslass-Hauptventil
- 56.1: dritter Auslass-Hauptventilanschluss
- 56.2: vierter Auslass-Hauptventilanschluss
- 56.3: vierter Steueranschluss
- 58: erster ABS-Vorratsanschluss
- 59: zweiter ABS-Vorratsanschluss
- 60: erstes pneumatisch schaltbares EPH-Hauptventil
- 60.1: erster EPH-Hauptventilanschluss
- 60.2: zweiter EPH-Hauptventilanschluss
- 60.3: fünfter Steueranschlus
- 62: erstes pneumatisch schaltbare Vorrats-Hauptventil
- 62.1: erster Vorrats-Hauptventilanschluss
- 62.2: zweiter Vorrats-Hauptventilanschluss
- 62.3: sechster-Steueranschluss
- 64: zweites pneumatisch schaltbares EPH-Hauptventil
- 64.1: dritter EPH-Hauptventilanschluss
- 64.2: vierter EPH-Hauptventilanschluss
- 64.3: siebter Steueranschlus
- 66: das zweite pneumatisch schaltbare Vorrats-Hauptventil
- 66.1: dritter Vorrats-Hauptventilanschluss
- 66.2: vierter Vorrats-Hauptventilanschluss
- 66.3: achter Steueranschluss
- 70: erstes ABS-Absperrventil
- 71: erstes 2/2-Wege-Ventil
- 72: zweites ABS-Absperrventil
- 73: zweites 2/2-Wege-Ventil
- 74: erstes 3/2-Wege-Ventil
- 75: zweites 3/2-Wege-Ventile
- 76: erster Absperr-Steueranschluss
- 77: zweiter Absperr-Steueranschluss
- 80: EPH-Vorsteuerventileinheit
- 82: Einlass-Auslass-Ventil
- 84: Anhängersteuerventil
- 86: Absperrventil
- 90: EPH-Hauptventileinheit
- 200: Fahrzeug
- 202: Nutzfahrzeug
- 204: elektronisch steuerbares pneumatisches Bremssystem
- 206a: erstes Rad
- 206b: zweites Rad
- 208a: erster Federspeicherbremszylinder
- 208b: zweiter Federspeicherbremszylinder
- 210: Hinterachsbremskreis
- 212: Vorderachsbremskreis
- 214: Feststellbremskreis
- 230: Redundanzanschluss
- 250: Fahrzeug-BUS
- 300: Zentralmodul
- 302a: erster Betriebsbremszylinder Hinterachse
- 302b: zweiter Betriebsbremszylinder Hinterachse
- 304: Einheit für autonomes Fahren
- 306: erster Druckluftvorrat
- 308: zweiter Druckluftvorrat
- 310: Vorderachsmodulator
- 312a: erste Vorderachs-ABS-Einheit
- 312b: zweite Vorderachs-ABS-Einheit
- 314a: erster Betriebsbremszylinder Vorderachse
- 314b: zweiter Betriebsbremszylinder Vorderachse
- 316: Select-High-Ventil
- 318: Redundanzanschluss Vorderachsmodulator
- 320: Redundanzanschluss EPH
- 322a: erster Raddrehzahlsensor Hinterachse
- 322b: zweiter Raddrehzahlsensor Hinterachse
- 324: direkte BUS-Verbindung
- 326a: erste redundante Vorderachs-ABS-Einheit
- 326b: zweite redundante Vorderachs-ABS-Einheit
- BST: Bremswertgeber
- ECU: EPH-Steuereinheit
- EPH: Feststellbremsmodul
- HA: Hinterachse
- HCU: Parkbremsschalter
- p1: erster Steuerdruck
- p2: zweiter Steuerdruck
- p3: dritter Steuerdruck
- p4: vierter Steuerdruck
- pEPH: EPH-Steuerdruck
- pF: Feststellbremsdruck
- pV: Vorratsdruck
- pPBV: Pneumatischer Feststellbremswunsch
- pB1: erster Bremsdruck
- pB2: zweiter Bremsdruck
- pBHA: Hinterachsbremsdruck
- pBVA: Vorderachsbremsdruck
- pR1: erster Redundanzdruck
- pR2: zweiter Redundanzdruck
- pR3: dritter Redundanzdruck
- S1: erstes ABS-Signal
- S2: zweites ABS-Signal
- SR: Redundanzsignal
- SP: Feststellbremswunsch (elektronisch)
- SR2: Zweites Redundanzsignal
- SD1: erstes Raddrehzahlsignal
- SD2: zweites Raddrehzahlsignal
- SVA: Vorderachssignal
- VA: Vorderachse

## Patentansprüche

1. Feststellbremsanordnung (1) für ein elektronisch steuerbares pneumatisches Bremssystem (204) für ein Fahrzeug (200), insbesondere Nutzfahrzeug (202), mit einer Feststellbremseinheit (2), die einen Vorratsanschluss (4) zum Empfangen eines Vorratsdrucks (pV), einen Bremswunschanschluss (6) zum Empfangen eines Feststellbremswunsches (pPBV, SP) und einen Feststellbremsdruckanschluss (8) zum Bereitstellen eines Feststellbremsdrucks (pF) aufweist, und einer ABS-Ventilanordnung (10), die eine erste ABS-Ventileinheit (12) für einen ersten Kanal (16a) und eine zweite ABS-Ventileinheit (14) für einen zweiten Kanal (16b) , aufweist, wobei die erste ABS-Ventileinheit (12) den Feststellbremsdruck (pF) empfängt und einen ersten Bremsdruck (pB1) für mindestens einen ersten Federspeicherbremszylinder (208a) an dem ersten Kanal (16a) bereitstellt, wobei die erste ABS-Ventileinheit (12) dazu ausgebildet ist, in Abhängigkeit eines empfangenen ersten ABS-Signals (S1) den ersten Kanal (16a) wenigstens gestuft zu belüften, und wobei die zweite ABS-Ventileinheit (14) den Feststellbremsdruck (pF) empfängt und einen zweiten Bremsdruck (pB2) für mindestens einen zweiten Federspeicherbremszylinder (208b) an dem zweiten Kanal (16b) bereitstellt, wobei die zweite ABS-Ventileinheit (12) dazu ausgebildet ist, in Abhängigkeit eines empfangenen zweiten ABS-Signals (S2) den zweiten Kanal (16b) wenigstens gestuft zu belüften, **dadurch gekennzeichnet, dass** die erste ABS-Ventileinheit (12) eine erste ABS-Vorsteuereinheit (30) zum Aussteuern eines ersten und eines zweiten Steuerdrucks (p1, p2) und eine erste ABS-Hauptventileinheit (34) aufweist, und die zweite ABS-Ventileinheit (14) eine zweite ABS-Vorsteuereinheit (32) zum Aussteuern eines dritten und eines vierten Steuerdrucks (p3, p4) und eine zweite ABS-Hauptventileinheit (36) aufweist.

2. Feststellbremsanordnung (1) nach Anspruch 1, wobei die Feststellbremseinheit (2) ein Relaisventil (20) zum Empfangen des Vorratsdrucks (pV) und eines Feststellbrems-Steuerdrucks (pPBV) umfasst, wobei das Relaisventil (20) in Abhängigkeit des Feststellbrems-Steuerdrucks (pPBV) den Feststellbremsdruck (pF) an dem Feststellbremsdruckanschluss (8) aussteuert.

3. Feststellbremsanordnung (1) nach einem der vorstehenden Ansprüche, aufweisend eine ABS-Steuereinheit (22) zum Bereitstellen wenigstens des ersten und zweiten ABS-Signals (S1, S2) an den ersten und zweiten ABSVentileinheiten (12, 14).

4. Feststellbremsanordnung (1) nach einem der vorstehenden Ansprüche, wobei die Feststellbremseinheit (2) als ein elektropneumatisches Feststellbremsmodul (EPH) mit einer darin integrierten EPH-Steuereinheit (ECU), einer EPH-Vorsteuerventileinheit (80) und einer EPH-Hauptventileinheit (90) ausgebildet ist.

5. Feststellbremsanordnung (1) nach Anspruch 4, wobei die EPHSteuereinheit (ECU) die ersten und zweiten ABS-Signal (S1, S2) an den ersten und zweiten ABS-Ventileinheiten (12, 14) bereitstellt.

6. Feststellbremsanordnung (1) nach einem der vorstehen Ansprüche, wobei die erste ABS-Vorsteuereinheit (30) ein erstes Einlass-Vorsteuerventil (40) zum Aussteuern des ersten Steuerdrucks (p1) und ein erstes AuslassVorsteuerventil (42) zum Aussteuern des zweiten Steuerdrucks (p2), und die zweite ABS-Vorsteuereinheit (32) ein zweites Einlass-Vorsteuerventil (50) zum Aussteuern des dritten Steuerdrucks (p3) und ein zweites AuslassVorsteuerventil (52) zum Aussteuern des vierten Steuerdrucks (p4) aufweist.

7. Feststellbremsanordnung (1) nach Anspruch 6, wobei die erste ABS-Hauptventileinheit (34) ein erstes pneumatisch schaltbares Einlass-Hauptventil (44) zum Belüften des ersten Kanals (16a) und ein erstes pneumatisch schaltbares Auslass-Hauptventil (46) zum Entlüften des ersten Kanals (16a) aufweist, wobei das erste pneumatisch schaltbare EinlassHauptventil (44) einen ersten Steueranschluss (44.3) zum Empfangen des ersten Steuerdrucks (p1) und das erste pneumatisch schaltbare AuslassHauptventil (46) einen zweiten Steueranschluss (46.3) zum Empfangen des zweiten Steuerdrucks (p2) aufweist; und die zweite ABS-Hauptventileinheit (36) ein zweites pneumatisch schaltbares Einlass-Hauptventil (54) zum Belüften des zweiten Kanals (16b) und ein zweites pneumatisch schaltbares Auslass-Hauptventil (56) zum Entlüften des zweiten Kanals (16b) aufweist, wobei das zweite pneumatisch schaltbare Einlass-Hauptventil (54) einen dritten Steueranschluss (54.3) zum Empfangen des dritten Steuerdrucks (p3) und das zweite pneumatisch schaltbare AuslassHauptventil (56) einen vierten Steueranschluss (56.3) zum Empfangen des vierten Steuerdrucks (p4) aufweist.

8. Feststellbremsanordnung (1) nach Anspruch 6, wobei die erste ABS-Hauptventileinheit (34) ein erstes pneumatisch schaltbares EPH-Hauptventil (60) zum Aussteuern des Feststellbremsdrucks (pF) an dem ersten Kanal (16a) und ein erstes pneumatisch schaltbares Vorrats-Hauptventil (62) zum Aussteuern des Vorratsdrucks (pV) an dem ersten Kanal (16a) aufweist, wobei das erste pneumatisch schaltbare EPH-Hauptventil (60) einen fünften Steueranschluss (60.3) zum Empfangen des ersten Steuerdrucks (p1) und das erste pneumatisch schaltbare Vorrats-Hauptventil (62) einen sechsten Steueranschluss (62.3) zum Empfangen des zweiten Steuerdrucks (p2) aufweist; und die zweite ABS-Hauptventileinheit (36) ein zweites pneumatisch schaltbares EPH-Hauptventil (64) zum Aussteuern des Feststellbremsdrucks (pF) an dem zweiten Kanal (16b) und ein zweites pneumatisch schaltbares VorratsHauptventil (66) zum Aussteuern des Vorratsdrucks (pV) an dem zweiten Kanal (16b) aufweist, wobei das zweite pneumatisch schaltbare EPH-Hauptventil (64) einen siebten Steueranschluss (64.3) zum Empfangen des dritten Steuerdrucks (p3) und das zweite pneumatisch schaltbare Vorrats-Hauptventil (66) einen achten Steueranschluss (66.3) zum Empfangen des vierten Steuerdrucks (p4) aufweist.

9. Feststellbremsanordnung (1) nach Anspruch 8, wobei die erste ABSVentileinheit (12) einen ersten ABS-Vorratsanschluss (58) zum Empfangen des Vorratsdrucks (pV) und die zweite ABS-Ventileinheit (14) einen zweiten ABSVorratsanschluss (59) zum Empfangen des Vorratsdrucks (pV) aufweist.

10. Feststellbremsanordnung (1) nach Anspruch 9, wobei die erste ABSVentileinheit (12) ein erstes ABS-Absperrventil (70) zum Absperren des ersten ABS-Vorratsanschluss (58) und die zweite ABS-Ventileinheit (14) ein zweites ABS-Absperrventil (72) zum Absperren des zweiten ABS-Vorratsanschluss (59) aufweist.

11. Feststellbremsanordnung (1) nach Anspruch 10, wobei das erste ABSAbsperrventil (70) und das zweite ABS-Absperrventil (72) als pneumatisch schaltbare 2/2-Wege-Ventile (71, 73) ausgebildet sind.

12. Feststellbremsanordnung (1) nach Anspruch 10, wobei das erste ABSAbsperrventil (70) und das zweite ABS-Absperrventil (72) als pneumatisch schaltbare 3/2-Wege-Ventile (74, 75) ausgebildet sind, die ein Entlüften des ersten bzw. zweiten Kanals (16a, 16b) über das jeweilige Vorrats-Hauptventil (62, 66) erlauben.

13. Feststellbremsanordnung (1) nach einem der vorstehenden Ansprüche, wobei die ersten und zweiten ABS-Ventileinheiten (12, 14) getrennt und beabstandet von der Feststellbremseinheit (2) angeordnet sind.

14. Feststellbremsanordnung (1) nach einem der vorstehenden Ansprüche 1 bis 12, wobei die ersten und zweiten ABS-Ventileinheiten (12, 14) an ein Gehäuse der Feststellbremseinheit (2) angeflanscht sind.

15. Feststellbremsanordnung (1) nach einem der vorstehenden Ansprüche 1 bis 12, wobei die ersten und zweiten ABS-Ventileinheiten (12, 14) und die Feststellbremseinheit (2) in ein Modul integriert sind.

16. Elektronisch steuerbares pneumatisches Bremssystem (204) für ein Fahrzeug (200), insbesondere Nutzfahrzeug (202), mit einem Hinterachsbremskreis (210), einem Vorderachsbremskreis (212) und einem Feststellbremskreis (214), wobei der Feststellbremskreis (214) erste und zweite Federspeicherbremszylinder (208a, 208b) und eine Feststellbremsanordnung (1) nach einem der vorstehenden Ansprüche 1 bis 15 aufweist, wobei der erste Kanal (16a) mit dem ersten Federspeicherbremszylinder (208a) und der zweite Kanal (16b) mit dem zweiten Federspeicherbremszylinder (208b) verbunden ist.

17. Elektronisch steuerbares pneumatisches Bremssystem (204) nach Anspruch 16, wobei die Feststellbremsanordnung (1) nach Anspruch 3 oder 4 ausgebildet ist und die ABS-Steuereinheit (22) bzw. die EPH-Steuereinheit (ECU) wenigstens einen ersten elektronischen Redundanzanschluss (230) zum Empfangen eines ersten redundanten elektronischen Bremswunschsignals (SR1) aufweist.

18. Verfahren zum Steuern eines elektronisch steuerbaren pneumatischen Bremssystems (204) für ein Fahrzeug, insbesondere Nutzfahrzeug (202), mit einem Hinterachsbremskreis (210), einem Vorderachsbremskreis (212) und einem Feststellbremskreis (214), wobei der Feststellbremskreis (214) erste und zweite Federspeicherbremszylinder (208a, 208b) und eine Feststellbremsanordnung (1) aufweist, wobei die Feststellbremsanordnung (1) für ein elektronisch steuerbares pneumatisches Bremssystem (204) für ein Fahrzeug (200), insbesondere Nutzfahrzeug (202), mit einer Feststellbremseinheit (2), die einen Vorratsanschluss (4) zum Empfangen eines Vorratsdrucks (pV), einen Bremswunschanschluss (6) zum Empfangen eines Feststellbremswunsches (pPBV, SP) und einen Feststellbremsdruckanschluss (8) zum Bereitstellen eines Feststellbremsdrucks (pF) aufweist, und einer ABS-Ventilanordnung (10), die eine erste ABS-Ventileinheit (12) für einen ersten Kanal (16a) und eine zweite ABS-Ventileinheit (14) für einen zweiten Kanal (16b) , aufweist, wobei die erste ABS-Ventileinheit (12) den Feststellbremsdruck (pF) empfängt und einen ersten Bremsdruck (pB1) für mindestens einen ersten Federspeicherbremszylinder (208a) an dem ersten Kanal (16a) bereitstellt, wobei die erste ABS-Ventileinheit (12) dazu ausgebildet ist, in Abhängigkeit eines empfangenen ersten ABS-Signals (S1) den ersten Kanal (16a) wenigstens gestuft zu belüften, und wobei die zweite ABS-Ventileinheit (14) den Feststellbremsdruck (pF) empfängt und einen zweiten Bremsdruck (pB2) für mindestens einen zweiten Federspeicherbremszylinder (208b) an dem zweiten Kanal (16b) bereitstellt, wobei die zweite ABS-Ventileinheit (12) dazu ausgebildet ist, in Abhängigkeit eines empfangenen zweiten ABS-Signals (S2) den zweiten Kanal (16b) wenigstens gestuft zu belüften, wobei der erste Kanal (16a) mit dem ersten Federspeicherbremszylinder (208a) und der zweite Kanal (16b) mit dem zweiten Federspeicherbremszylinder (208b) verbunden ist, aufweisend die Schritte: - Bereitstellen eines ersten Bremsdrucks (pB1) und eines zweiten Bremsdrucks (pB2) an ersten und zweiten Federspeicherbremszylindern (208a, 208b) einer Achse (HA) zum Lösen dieser; - Ermitteln eines Fehlers, der wenigstens teilweise ein elektronisch gesteuertes Bremsen der Achse (AH) mittels Betriebsbremszylindern (207a, 207b) verhindert; - Bereitstellen eines redundanten elektronischen Bremswunschsignals (SR1) an der Feststellbremsanordnung (1); und - radindividuelles, schlupfgeregeltes Umsetzen des redundanten elektronischen Bremswunschsignals (SR1) mittels der Feststellbremsanordnung (1) an der Achse (HA) wenigstens durch gestuftes, schlupfgeregeltes Entlüften der ersten und zweiten Federspeicherbremszylinder (208a, 208b).

19. Nutzfahrzeug (202), mit einer Feststellbremsanordnung (1) nach einem der vorstehenden Ansprüche 1 bis 15.

## Claims

1. Parking brake assembly (1) for an electronically controllable pneumatic brake system (204) for a vehicle (200), in particular a commercial vehicle (202), comprising a parking brake unit (2), which has a supply connection (4) for receiving a supply pressure (pV), a braking request connection (6) for receiving a parking brake request (pPBV, SP), and a parking brake pressure connection (8) for providing a parking brake pressure (pF), and an ABS valve assembly (10) which has a first ABS valve unit (12) for a first channel (16a) and a second ABS valve unit (14) for a second channel (16b), the first ABS valve unit (12) receiving the parking brake pressure (pF) and providing a first brake pressure (pB1) for at least one first spring brake actuator (208a) at the first channel (16a), the first ABS valve unit (12) being designed to ventilate the first channel (16a), at least incrementally, on the basis of a received first ABS signal (S1), and the second ABS valve unit (14) receiving the parking brake pressure (pF) and providing a second brake pressure (pB2) for at least one second spring brake actuator (208b) at the second channel (16b), the second ABS valve unit (12) being designed to ventilate the second channel (16b), at least incrementally, on the basis of a received second ABS signal (S2),
**characterized in that**
the first ABS valve unit (12) has a first ABS pilot control unit (30) for adjusting a first and a second control pressure (p1, p2) and a first ABS main valve unit (34), and the second ABS valve unit (14) has a second ABS pilot control unit (32) for adjusting a third and a fourth control pressure (p3, p4) and a second ABS main valve unit (36).

2. Parking brake assembly (1) according to claim 1, wherein the parking brake unit (2) comprises a relay valve (20) for receiving the supply pressure (pV) and a parking brake control pressure (pPBV), wherein the relay valve (20) adjusts the parking brake pressure (pF) at the parking brake pressure connection (8) on the basis of the parking brake control pressure (pPBV).

3. Parking brake assembly (1) according to any of the preceding claims, comprising an ABS control unit (22) for providing at least the first and second ABS Signals (S1, S2) at the first and second ABS valve units (12,14).

4. Parking brake assembly (1) according to any of the preceding claims, wherein the parking brake unit (2) is designed as an electropneumatic parking brake module (EPH), having an EPH control unit (ECU) integrated therein, an EPH pilot control valve unit (80) and an EPH main valve unit (90).

5. Parking brake assembly (1) according to claim 4, wherein the EPH control unit (ECU) provides the first and second ABS signal (S1, S2) at the first and second ABS valve units (12,14).

6. Parking brake assembly (1) according to any of the preceding claims, wherein the first ABS pilot control unit (30) has a first inlet pilot control valve (40) for adjusting the first control pressure (p1) and a first outlet pilot control valve (42) for adjusting the second control pressure (p2), and the second ABS pilot control unit (32) has a second inlet pilot control valve (50) for adjusting the third control pressure (p3) and a second outlet pilot control valve (52) for adjusting the fourth control pressure (p4).

7. Parking brake assembly (1) according to claim 6, wherein the first ABS main valve unit (34) has a first pneumatically switchable inlet main valve (44) for ventilating the first channel (16a) and a first pneumatically switchable outlet main valve (46) for bleeding the first channel (16a), wherein the first pneumatically switchable inlet main valve (44) has a first control connection (44.3) for receiving the first control pressure (p1) and the first pneumatically switchable outlet main valve (46) has a second control connection (46.3) for receiving the second control pressure (p2); and the second ABS main valve unit (36) has a second pneumatically switchable inlet main valve (54) for ventilating the second channel (16b) and a second pneumatically switchable outlet main valve (56) for bleeding the second channel (16b), wherein the second pneumatically switchable inlet main valve (54) has a third control connection (54.3) for receiving the third control pressure (p4) and the second pneumatically switchable outlet main valve (56) has a fourth control connection (56.3) for receiving the fourth control pressure (p4).

8. Parking brake assembly (1) according to claim 6, wherein the first ABS main valve unit (34) has a first pneumatically switchable EPH main valve (60) for adjusting the parking brake pressure (pF) at the first channel (16a) and a first pneumatically switchable supply main valve (62) for adjusting the supply pressure (pV) at the first channel (16a), wherein the first pneumatically switchable EPH main valve (60) has a fifth control connection (60.3) for receiving the first control pressure (p1) and the first pneumatically switchable supply main valve (62) has a sixth control connection (62.3) for receiving the second control pressure (p2); and the second ABS main valve unit (36) has a second pneumatically switchable EPH main valve (64) for adjusting the parking brake pressure (pF) at the second channel (16b) and a second pneumatically switchable supply main valve (66) for adjusting the supply pressure (pV) at the second channel (16b), wherein the second pneumatically switchable EPH main valve (64) has a seventh control connection (64.3) for receiving the third control pressure (p3) and the second pneumatically switchable supply main valve (66) has an eighth control connection (66.3) for receiving the fourth control pressure (p4).

9. Parking brake assembly (1) according to claim 8, wherein the first ABS valve unit (12) has a first ABS supply connection (58) for receiving the supply pressure (pV) and the second ABS valve unit (14) has a second ABS supply connection (59) for receiving the supply pressure (pV).

10. Parking brake assembly (1) according to claim 9, wherein the first ABS valve unit (12) has a first ABS shut-off valve (70) for shutting off the first ABS supply connection (58) and the second ABS valve unit (14) has a second ABS shut-off valve (72) for shutting off the second ABS supply connection (59).

11. Parking brake assembly (1) according to claim 10, wherein the first ABS shut-off valve (70) and the second ABS shut-off valve (72) are designed as pneumatically switchable 2/2-way valves (71, 73).

12. Parking brake assembly (1) according to claim 10, wherein the first ABS shut-off valve (70) and the second ABS shut-off valve (72) are designed as pneumatically switchable 3/2-way valves (74, 75) which allow bleeding of the first or second channel (16a, 16b) via the relevant supply main valve (62, 66).

13. Parking brake assembly (1) according to any of the preceding claims, wherein the first and second ABS valve units (12, 14) are arranged separately and spaced apart from the parking brake unit (2).

14. Parking brake assembly (1) according to any of the preceding claims 1 to 12, wherein the first and second ABS valve units (12, 14) are flange-mounted on a housing of the parking brake unit (2).

15. Parking brake assembly (1) according to any of the preceding claims 1 to 12, wherein the first and second ABS valve units (12, 14) and the parking brake unit (2) are integrated in one module.

16. Electronically controllable pneumatic brake system (204) for a vehicle (200), in particular a commercial vehicle (202), comprising a rear axle brake circuit (210), a front axle brake circuit (212), and a parking brake circuit (214), wherein the parking brake circuit (214) has first and second spring brake actuators (208a, 208b) and a parking brake assembly (1) according to any of the preceding claims 1 to 15, wherein the first channel (16a) is connected to the first spring brake actuator (208a) and the second channel (16b) is connected to the second spring brake actuator (208b).

17. Electronically controllable pneumatic brake system (204) according to claim 16, wherein the parking brake assembly (1) is designed according to claim 3 or 4, and the ABS control unit (22) or the EPH control unit (ECU) has at least a first electronic redundancy connection (230) for receiving a first redundant electronic brake request signal (SR1).

18. Method for controlling an electronically controllable pneumatic brake system (204) for a vehicle, in particular a commercial vehicle (202), comprising a rear axle brake circuit (210), a front axle brake circuit (212) and a parking brake circuit (214), wherein the parking brake circuit (214) has first and second spring brake actuators (208a, 208b) and a parking brake assembly (1), wherein the parking brake assembly (1) for an electronically controllable pneumatic brake system (204) for a vehicle (200), in particular a commercial vehicle (202), comprises a parking brake unit (2), which has a supply connection (4) for receiving a supply pressure (pV), a braking request connection (6) for receiving a parking brake request (pPBV, SP) and a parking brake pressure connection (8) for providing a parking brake pressure (pF), and an ABS valve assembly (10), which has a first ABS valve unit (12) for a first channel (16a) and a second ABS valve unit (14) for a second channel (16b), wherein the first ABS valve unit (12) receives the parking brake pressure (pF) and provides a first brake pressure (pB1) for at least one first spring brake actuator (208a) at the first channel (16a), wherein the first ABS valve unit (12) is designed to ventilate the first channel (16a), at least incrementally, on the basis of a received first ABS signal (S1), and wherein the second ABS valve unit (14) receives the parking brake pressure (pF) and provides a second brake pressure (pB2) for at least one second spring brake actuator (208b) at the second channel (16b), wherein the second ABS valve unit (12) is designed to ventilate the second channel (16b), at least incrementally, on the basis of a received second ABS signal (S2), wherein the first channel (16a) is connected to the first spring brake actuator (208a) and the second channel (16b) is connected to the second spring brake actuator (208b), the method comprising the following steps: - providing a first brake pressure (pB1) and a second brake pressure (pB2) at first and second spring brake actuators (208a, 208b) of an axle (HA) to release said actuators; - determining a fault which at least in part prevents electronically controlled braking of the axle (AH) by means of service brake cylinders (207a, 207b); - providing a redundant electronic brake request signal (SR1) to the parking brake assembly (1); and - wheel-specific, slip-controlled conversion of the redundant electronic brake request signal (SR1) by means of the parking brake assembly (1) at the axle (HA) at least by incremental, slip-controlled bleeding of the first and second spring brake actuators (208a, 208b).

19. Commercial vehicle (202) comprising a parking brake assembly (1) according to any of the preceding claims 1 to 15.

## Revendications

1. Agencement de frein de stationnement (1) pour un système de freinage pneumatique (204) pouvant être commandé électroniquement pour un véhicule (200), en particulier un véhicule utilitaire (202), comportant une unité de frein de stationnement (2), laquelle présente un raccord de réserve (4) pour la réception d'une pression de réserve (pV), un raccord de demande de freinage (6) pour la réception d'une demande de freinage de stationnement (pPBV, SP) et un raccord de pression de frein de stationnement (8) pour la fourniture d'une pression de frein de stationnement (pF), et un agencement de soupapes ABS (10), lequel présente une première unité de soupapes ABS (12) pour un premier canal (16a) et une seconde unité de soupapes ABS (14) pour un second canal (16b), la première unité de soupapes ABS (12) recevant la pression de frein de stationnement (pF) et fournissant une première pression de frein (pB1) pour au moins un premier cylindre de frein à accumulateur à ressort (208a) au niveau du premier canal (16a), la première unité de soupapes ABS (12) étant conçue pour, en fonction d'un premier signal ABS (S1) reçu, ventiler au moins de manière étagée le premier canal (16a), et la seconde unité de soupapes ABS (14) recevant la pression de frein de stationnement (pF) et fournissant une seconde pression de frein (pB2) pour au moins un second cylindre de frein à accumulateur à ressort (208b) au niveau du second canal (16b), la seconde unité de soupapes ABS (12) étant conçue pour, en fonction d'un second signal ABS (S2) reçu, ventiler au moins de manière étagée le second canal (16b),
**caractérisé en ce que**
la première unité de soupapes ABS (12) présente une première unité de commande pilote ABS (30) pour la commande d'une première et d'une deuxième pression de commande (p1, p2) et une première unité de soupape principale ABS (34), et la seconde unité de soupapes ABS (14) présente une seconde unité de commande pilote ABS (32) pour la commande d'une troisième et d'une quatrième pression de commande (p3, p4) et une seconde unité de soupape principale ABS (36).

2. Agencement de frein de stationnement (1) selon la revendication 1, l'unité de frein de stationnement (2) comprenant une soupape relais (20) pour la réception de la pression de réserve (pV) et d'une pression de commande de frein de stationnement (pPBV), la soupape relais (20) commandant la pression de frein de stationnement (pF) au niveau du raccord de pression de frein de stationnement (8) en fonction de la pression de commande de frein de stationnement (pPBV).

3. Agencement de frein de stationnement (1) selon l'une des revendications précédentes, présentant une unité de commande ABS (22) pour la fourniture au moins du premier et du second signal ABS (S1, S2) aux première et seconde unités de soupapes ABS (12, 14).

4. Agencement de frein de stationnement (1) selon l'une des revendications précédentes, l'unité de frein de stationnement (2) étant conçue comme un module de frein de stationnement (EPH) électropneumatique comportant une unité de commande EPH (ECU) intégrée dans celui-ci, une unité de soupape pilote EPH (80) et une unité de soupape principale EPH (90).

5. Agencement de frein de stationnement (1) selon la revendication 4, l'unité de commande EPH (ECU) fournissant les premier et second signaux ABS (S1, S2) aux première et seconde unités de soupapes ABS (12, 14).

6. Agencement de frein de stationnement (1) selon l'une des revendications précédentes, la première unité de commande pilote ABS (30) présentant une première soupape pilote d'entrée (40) pour la commande de la première pression de commande (p1) et une première soupape pilote de sortie (42) pour la commande de la deuxième pression de commande (p2), et la seconde unité de commande pilote ABS (32) présentant une seconde soupape pilote d'entrée (50) pour la commande de la troisième pression de commande (p3) et une seconde soupape pilote de sortie (52) pour la commande de la quatrième pression de commande (p4).

7. Agencement de frein de stationnement (1) selon la revendication 6, la première unité de soupape principale ABS (34) présentant une première soupape principale d'entrée (44) pouvant être commutée pneumatiquement pour la ventilation du premier canal (16a) et une première soupape principale de sortie (46) pouvant être commutée pneumatiquement pour la purge du premier canal (16a), la première soupape principale d'entrée (44) pouvant être commutée pneumatiquement présentant un premier raccord de commande (44.3) pour la réception de la première pression de commande (p1) et la première soupape principale de sortie (46) pouvant être commutée pneumatiquement présentant un deuxième raccord de commande (46.3) pour la réception de la deuxième pression de commande (p2) ; et la seconde unité de soupape principale ABS (36) présentant une seconde soupape principale d'entrée (54) pouvant être commutée pneumatiquement pour la ventilation du second canal (16b) et une seconde soupape principale de sortie (56) pouvant être commutée pneumatiquement pour la purge du second canal (16b), la seconde soupape principale d'entrée (54) pouvant être commutée pneumatiquement présentant un troisième raccord de commande (54.3) pour la réception de la troisième pression de commande (p3) et la seconde soupape principale de sortie (56) pouvant être commutée pneumatiquement présentant un quatrième raccord de commande (56.3) pour la réception de la quatrième pression de commande (p4).

8. Agencement de frein de stationnement (1) selon la revendication 6, la première unité de soupape principale ABS (34) présentant une première soupape principale EPH (60) pouvant être commutée pneumatiquement pour la commande de la pression de frein de stationnement (pF) au niveau du premier canal (16a) et une première soupape principale de réserve (62) pouvant être commutée pneumatiquement pour la commande de la pression de réserve (pV) au niveau du premier canal (16a), la première soupape principale EPH (60) pouvant être commutée pneumatiquement présentant un cinquième raccord de commande (60.3) pour la réception de la première pression de commande (p1) et la première soupape principale de réserve (62) pouvant être commutée pneumatiquement présentant un sixième raccord de commande (62.3) pour la réception de la deuxième pression de commande (p2) ; et la seconde unité de soupape principale ABS (36) présentant une seconde soupape principale EPH (64) pouvant être commutée pneumatiquement pour la commande de la pression de frein de stationnement (pF) au niveau du second canal (16b) et une seconde soupape principale de réserve (66) pouvant être commutée pneumatiquement pour la commande de la pression de réserve (pV) au niveau du second canal (16b), la seconde soupape principale EPH (64) pouvant être commutée pneumatiquement présentant un septième raccord de commande (64.3) pour la réception de la troisième pression de commande (p3) et la seconde soupape principale de réserve (66) pouvant être commutée pneumatiquement présentant un huitième raccord de commande (66.3) pour la réception de la quatrième pression de commande (p4).

9. Agencement de frein de stationnement (1) selon la revendication 8, la première unité de soupapes ABS (12) présentant un premier raccord de réserve ABS (58) pour la réception de la pression de réserve (pV) et la seconde unité de soupapes ABS (14) présentant un second raccord de réserve ABS (59) pour la réception de la pression de réserve (pV).

10. Agencement de frein de stationnement (1) selon la revendication 9, la première unité de soupapes ABS (12) présentant une première soupape de fermeture ABS (70) pour la fermeture du premier raccord de réserve ABS (58) et la seconde unité de soupapes ABS (14) présentant une seconde soupape de fermeture ABS (72) pour la fermeture du second raccord de réserve ABS (59).

11. Agencement de frein de stationnement (1) selon la revendication 10, la première soupape de fermeture ABS (70) et la seconde soupape de fermeture ABS (72) étant conçues comme des soupapes à 2/2 voies (71, 73) pouvant être commutées pneumatiquement.

12. Agencement de frein de stationnement (1) selon la revendication 10, la première soupape de fermeture ABS (70) et la seconde soupape de fermeture ABS (72) étant conçues comme des soupapes à 3/2 voies (74, 75) pouvant être commutées pneumatiquement qui permettent une purge du premier ou du second canal (16a, 16b) par l'intermédiaire de la soupape principale de réserve (62, 66) respective.

13. Agencement de frein de stationnement (1) selon l'une des revendications précédentes, les première et seconde unités de soupapes ABS (12, 14) étant disposées séparées et espacées de l'unité de frein de stationnement (2).

14. Agencement de frein de stationnement (1) selon l'une des revendications 1 à 12 précédentes, les première et seconde unités de soupapes ABS (12, 14) étant fixées par bride à un boîtier de l'unité de frein de stationnement (2).

15. Agencement de frein de stationnement (1) selon l'une des revendications 1 à 12 précédentes, les première et seconde unités de soupapes ABS (12, 14) et l'unité de frein de stationnement (2) étant intégrées dans un module.

16. Système de freinage pneumatique (204) pouvant être commandé électroniquement pour un véhicule (200), en particulier un véhicule utilitaire (202), comportant un circuit de freinage d'essieu arrière (210), un circuit de freinage d'essieu avant (212) et un circuit de freinage de stationnement (214), le circuit de freinage de stationnement (214) présentant des premier et second cylindres de frein à accumulateur à ressort (208a, 208b) et un agencement de frein de stationnement (1) selon l'une des revendications 1 à 15 précédentes, le premier canal (16a) étant relié au premier cylindre de frein à accumulateur à ressort (208a) et le second canal (16b) étant relié au second cylindre de frein à accumulateur à ressort (208b).

17. Système de freinage pneumatique (204) pouvant être commandé électroniquement selon la revendication 16, l'agencement de frein de stationnement (1) étant conçu selon la revendication 3 ou 4 et l'unité de commande ABS (22) ou l'unité de commande EPH (ECU) présentant au moins un premier raccord de redondance électronique (230) pour la réception d'un premier signal de demande de freinage électronique redondant (SR1).

18. Procédé pour la commande d'un système de freinage pneumatique (204) pouvant être commandé électroniquement pour un véhicule, en particulier un véhicule utilitaire (202), comportant un circuit de freinage d'essieu arrière (210), un circuit de freinage d'essieu avant (212) et un circuit de freinage de stationnement (214), le circuit de freinage de stationnement (214) présentant des premier et second cylindres de frein à accumulateur à ressort (208a, 208b) et un agencement de frein de stationnement (1), l'agencement de frein de stationnement (1) pour un système de freinage pneumatique (204) pouvant être commandé électroniquement pour un véhicule (200), en particulier un véhicule utilitaire (202), comportant une unité de frein de stationnement (2) qui présente un raccord de réserve (4) pour la réception d'une pression de réserve (pV), un raccord de demande de freinage (6) pour la réception d'une demande de freinage de stationnement (pPBV, SP) et un raccord de pression de frein de stationnement (8) pour la fourniture d'une pression de frein de stationnement (pF), et un agencement de soupapes ABS (10), qui présente une première unité de soupapes ABS (12) pour un premier canal (16a) et une seconde unité de soupapes ABS (14) pour un second canal (16b), la première unité de soupapes ABS (12) recevant la pression de frein de stationnement (pF) et fournissant une première pression de frein (pB1) pour au moins un premier cylindre de frein à accumulateur à ressort (208a) au niveau du premier canal (16a), la première unité de soupapes ABS (12) étant conçue pour, en fonction d'un premier signal ABS (S1) reçu, ventiler au moins de manière étagée le premier canal (16a), et la seconde unité de soupapes ABS (14) recevant la pression de frein de stationnement (pF) et fournissant une seconde pression de frein (pB2) pour au moins un second cylindre de frein à accumulateur à ressort (208b) au niveau du second canal (16b), la seconde unité de soupapes ABS (12) étant conçue pour, en fonction d'un second signal ABS (S2) reçu, ventiler au moins de manière étagée le second canal (16b), le premier canal (16a) étant relié au premier cylindre de frein à accumulateur à ressort (208a) et le second canal (16b) étant relié au second cylindre de frein à accumulateur à ressort (208b), présentant les étapes de : - fourniture d'une première pression de frein (pB1) et d'une seconde pression de frein (pB2) aux premier et second cylindres de frein à accumulateur à ressort (208a, 208b) d'un essieu (HA) pour le desserrage de celui-ci ; - détermination d'une erreur, laquelle empêche au moins partiellement un freinage commandé électroniquement de l'essieu (AH) au moyen de cylindres de frein de service (207a, 207b) ; - fourniture d'un signal de demande de freinage électronique redondant (SR1) à l'agencement de frein de stationnement (1) ; et - mise en oeuvre, individuelle pour chaque roue et avec régulation du patinage, du signal de demande de freinage électronique redondant (SR1) au moyen de l'agencement de frein de stationnement (1) sur l'essieu (HA) au moins par une purge de manière étagée et avec régulation du patinage des premier et second cylindres de frein à accumulateur à ressort (208a, 208b).

19. Véhicule utilitaire (202), comportant un agencement de frein de stationnement (1) selon l'une des revendications 1 à 15 précédentes.
